(19) Europäisches Patentamt
European Patent Office
Office européen des brevets

(11) **EP 4 560 455 A1**

(12) **EUROPEAN PATENT APPLICATION**
published in accordance with Art. 153(4) EPC

(43) Date of publication:
28.05.2025 Bulletin 2025/22

(51) International Patent Classification (IPC):
**G06F 3/14** (2006.01)  **G06F 21/84** (2013.01)
**B60W 50/14** (2020.01)

(21) Application number: 22954660.1

(22) Date of filing: 12.08.2022

(52) Cooperative Patent Classification (CPC):
**B60W 50/14; G06F 3/14; G06F 21/84**

(86) International application number:
**PCT/CN2022/112309**

(87) International publication number:
**WO 2024/031709 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• LI, Shuai
  Shenzhen, Guangdong 518129 (CN)
• XIA, Pei
  Shenzhen, Guangdong 518129 (CN)
• ZHOU, Jin
  Shenzhen, Guangdong 518129 (CN)
• SONG, Xianxi
  Shenzhen, Guangdong 518129 (CN)

(74) Representative: **Körber, Martin Hans
Mitscherlich PartmbB
Patent- und Rechtsanwälte
Karlstraße 7
80333 München (DE)**

(54) **DISPLAY METHOD AND DEVICE**

(57)     This application provides a display method and apparatus. The method includes: obtaining image information, where the image information includes an eye of a first user; determining an eye position and a line-of-sight direction of the first user based on the image information; and adjusting a display manner of a first area in a display area based on the eye position and the line-of-sight direction of the first user. The display area is a display area of a head-up display or a display area of an augmented reality head-up display, and the first area includes privacy information of a second user. Through implementation of embodiments of this application, a risk of privacy information leakage can be reduced, and a feeling of safety of the user is improved.

```
┌─────────────────────────────────────────────────────────────┐
│  Obtain image information, where the image information is      │  601
│  used to determine an eye position and a line-of-sight         │
│  direction of a first user of a vehicle                        │
└─────────────────────────────────────────────────────────────┘
                              │
                              ▼
┌─────────────────────────────────────────────────────────────┐
│  Adjust a display manner of a first area in a display area     │  602
│  based on the eye position and the line-of-sight direction     │
│  of the first user, where the first area includes privacy      │
│  information of a second user of the vehicle                   │
└─────────────────────────────────────────────────────────────┘
```

FIG. 6

EP 4 560 455 A1

## Description

## TECHNICAL FIELD

This application relates to the field of man-machine interaction, and in particular, to a display method and apparatus.

## BACKGROUND

With gradual increase of man-machine interaction functions in a cockpit, display apparatuses are used more frequently. Currently, display apparatuses in cockpits are mainly classified into two types: a first type is a vehicle-mounted display, and a second type is a projection display, for example, a head-up display (head-up display, HUD) apparatus.

In recent years, with rapid development of the HUD, for example, an augmented reality head-up display (augmented reality head-up display, AR-HUD) apparatus, vehicle information is projected by the HUD onto a windshield for displaying. This greatly ensures safety of a driver.

## SUMMARY

This application provides a display method and apparatus, to reduce a risk of privacy information leakage and improve a feeling of safety of a user.

According to a first aspect, a display method is provided, including: obtaining image information, where the image information is used to determine an eye position and a line-of-sight direction of a first user of a vehicle; and adjusting a display manner of a first area in a display area based on the eye position and the line-of-sight direction of the first user, where the display area is a display area of an HUD, and the first area includes privacy information of a second user of the vehicle. It can be learned that a vehicle-mounted terminal may obtain the image information used to determine the eye position and the line-of-sight direction of the first user of the vehicle, and may adjust the display manner of the first area in the display area based on the eye position and the line-of-sight direction of the first user. This can reduce a possibility that the first user can view the privacy information of the second user, can reduce a risk of privacy information leakage, and improves a feeling of safety of the user.

In this application, the image information may be an image obtained directly by a sensor, or may be information obtained after being processed by the sensor, or may be information obtained by processing an image obtained by the sensor by using a processor. Herein, the image information may be, for example, a key point matrix, or a key point set. That is, a face key point is marked in the image information. A face key point is a point used to locate a key area of a face in a face image. The key area includes one or more of eyebrows, eyes, the nose, the mouth, and a face contour. It should be understood that, in this application, the image information may be used to obtain an eye position of the user. For example, the eye position of the first user is marked in the image information, and an eye position of the second user is also marked in the image information. The first user may be, for example, a non-driver, and the second user may be, for example, a driver.

Optionally, the eye position of the user may be, for example, a middle point of two eye centers, a left eye center, or a right eye center. Herein, an eye center may be a pupil center, an eyeball center, a corneal center, or another position of the eye.

It should be understood that in this application, the HUD may be, for example, one or more of an AR-HUD, a combiner-HUD (combiner-HUD, C-HUD), or a windshield-HUD (windshield-HUD, W-HUD). The first area may be a part of the display area, or may be an entire area of the display area.

The privacy information may include, for example, information in one or more forms of a text, a picture, a video, or the like.

Optionally, with reference to the first aspect, the first user is located in a non-driver position of the vehicle, and the second user is located in a driver position of the vehicle.

Optionally, with reference to the first aspect, that the first user is located in a non-driver position of the vehicle includes: The first user is located in a front passenger position of the vehicle; or the first user is located in a rear-row area of the vehicle. Specifically, if an in-vehicle area is divided into a driver position, a front passenger position, left in a second row, and right in the second row, the first user may be in the left in the second row or the right in the second row of the vehicle. If an in-vehicle area is divided into a driver position, a front passenger position, left in a second row, a middle in the second row, and right in the second row, the first user may be in the left in the second row, the middle in the second row, or the right in the second row of the vehicle.

Optionally, with reference to the first aspect, the adjusting a display manner of a first area in a display area based on the eye position and the line-of-sight direction of the first user includes: determining whether the eye position of the first user is within a viewing angle range of the display area; and adjusting the display manner of the first area in the display area to a first display manner when a first condition is met, where the first condition includes at least one of the following: The eye position of the first user is within a viewing angle range of the display area; the line-of-sight direction of the first user is towards the display area; or time for which a line of sight of the first user stays in the display area is greater than or equal to preset time. It should be understood that the first condition may be pre-agreed or defined in a standard. This is not limited herein. It can be learned that, when the first condition is met, the vehicle-mounted terminal adjusts the display manner of the first area in the display area to the first display manner. In other words, when it is detected that the first user may view the privacy information of the second user in the first area, the vehicle-mounted terminal adjusts the display manner of the first area in the display area to the first display manner, so that a possibility that the first user can view the privacy information of the second user can be reduced. This can reduce a risk of privacy information leakage, and improves a feeling of safety of the user.

The viewing angle range of the display area includes an angle range of an eye that is of the first user and that can see a picture of the display area, and a boundary point may be determined by a maximum angle value and a minimum angle value of the eye that is of the first user and that can see the picture of the display area. In other words, the viewing angle range of the display area may include a range determined by the maximum angle value and the minimum angle value, and may further include the boundary point, for example, the maximum angle value and/or the minimum angle value, or may not include the boundary point. This may be defined in a specific implementation process.

It should be understood that the viewing angle range of the display area is related to the eye position of the first user.

Optionally, the preset time may be preset, or may be obtained by the vehicle-mounted terminal from a cloud, or may be determined by the user. This is not limited herein.

Optionally, with reference to the first aspect, the first display manner includes at least one of the following: hiding the first area; hiding the privacy information of the second user in the first area; fading the first area; switching first definition of the first area to second definition, and displaying the privacy information of the second user in the second definition, where the first definition is higher than the second definition; or switching first resolution of the first area to second resolution, and displaying the privacy information of the second user in the second resolution, where the first resolution is higher than the second resolution. It should be understood that, when definition of the first area is the first definition, or resolution of the first area is the first resolution, the user may clearly view the privacy information in the first area; when the definition of the first area is the second definition, or the resolution of the first area is the second resolution, the user cannot clearly view the privacy information, or even cannot view the privacy information.

Optionally, with reference to the first aspect, the method further includes: adjusting the display manner of the first area in the display area from the first display manner to a second display manner when a second condition is met, where the second condition includes at least one of the following: The eye position of the first user exceeds the viewing angle range of the display area; the line-of-sight direction of the first user is towards an area other than the display area; or time for which the line of sight of the first user stays in the display area is less than the preset time. It should be understood that the second condition may be pre-agreed or defined in a standard. This is not limited herein. It can be learned that, when the second condition is met, the vehicle-mounted terminal adjusts the display manner of the first area in the display area from the first display manner to the second display manner. In other words, when it is detected that the first user cannot view the privacy information of the second user in the first area, the vehicle-mounted terminal adjusts the display manner of the first area in the display area from the first display manner to the second display manner, so that the second user can view the privacy information of the second user.

Optionally, with reference to the first aspect, the second display manner includes at least one of the following: displaying the privacy information of the second user in the first area; switching second definition of the first area to first definition, and displaying the privacy information of the second user in the first definition, where the first definition is higher than the second definition; or switching second resolution of the first area to first resolution, and displaying the privacy information of the second user in the first resolution, where the first resolution is higher than the second resolution.

Optionally, with reference to the first aspect, the image information is further used to determine an eye position of the second user, and the determining whether the eye position of the first user is within a viewing angle range of the display area includes: determining an included angle formed by a connection line between the eye position of the second user and a first target point in the display area and a connection line between the eye position of the first user and the first target point, to obtain a first angle value; and determining, based on the first angle value, whether the eye position of the first user is within the viewing angle range of the display area. It can be learned that the vehicle-mounted terminal may determine, based on the first angle value, whether the eye position of the first user is within the viewing angle range of the display area, to prepare for subsequently adjusting the display manner of the first area in the display area.

Optionally, with reference to the first aspect, a cosine value of the first angle value is as follows:

$$R_1 = \frac{(P_{hud} - P_{eye}) \cdot (P_{hud} - P'_{eye})}{|P_{hud} - P_{eye}| \cdot |P_{hud} - P'_{eye}|}$$

, where $P_{hud}$ is the first target point, $P_{eye}$ is the eye position of the first user, and $P'_{eye}$ is the eye position of the second user.

Optionally, with reference to the first aspect, before the adjusting the display manner of the first area in the display area to a first display manner, the method further includes: determining an included angle formed by a connection line between the eye position of the first user and a first target point in the display area and the line-of-sight direction of the first user, to obtain a second angle value; and determining, based on the second angle value, whether the line-of-sight direction of the first user is towards the display area. It can be learned that the vehicle-mounted terminal may determine, based on the second angle value, whether the line-of-sight direction of the first user is towards the display area, to prepare for subsequently adjusting the display manner of the first area in the display area.

Optionally, with reference to the first aspect, a cosine value of the second angle value is as follows:

$$R_2 = \frac{(P_{hud-Peye}) \cdot \overrightarrow{V_{eye}}}{|P_{hud-Peye}|}$$

, where $P_{hud}$ is the first target point, $P_{eye}$ is an eye position of the second user, and $\overrightarrow{V_{eye}}$ is a unit vector of the line-of-sight direction of the first user.

Optionally, with reference to the first aspect, the first target point is a center point of the display area; the first target point is a vertex of the display area; or the first target point is a center point of a side edge of the display area, and the side edge of the display area includes a left side, a right side, an upper side, or a lower side of the display area.

Optionally, with reference to the first aspect, before the obtaining image information, the method further includes: enabling a privacy information protection mode when a third condition is met, where the third condition includes at least one of the following: detecting that there is a user other than the second user in the vehicle in which the second user is located; detecting that there is a user other than a preset user in the vehicle; and detecting a mode setting instruction, where the mode setting instruction is used to enable the privacy information protection mode. It should be understood that the third condition may be pre-agreed or defined in a standard. This is not limited herein. It can be learned that when the third condition is met, the vehicle-mounted terminal enables the privacy information protection mode, so that the vehicle-mounted terminal can adjust the display manner of the first area in the display area.

The preset user may be preset, or may be obtained by the vehicle-mounted terminal from a cloud, or may be determined by the user. This is not limited herein. In a possible implementation, the preset user may include, for example, the second user, and may further include a family member of the second user, a friend of the second user, and the like.

According to a second aspect, a display apparatus is provided, including a receiving unit and a processing unit, where the receiving unit is configured to obtain image information, the image information is used to determine an eye position and a line-of-sight direction of a first user of a vehicle; and the processing unit is configured to adjust a display manner of a first area in a display area based on the eye position and the line-of-sight direction of the first user, where the display area is a display area of an HUD, and the first area includes privacy information of a second user of the vehicle.

Optionally, with reference to the second aspect, the first user is located in a non-driver position of the vehicle, and the second user is located in a driver position of the vehicle.

Optionally, with reference to the second aspect, that the first user is located in a non-driver position of the vehicle includes: The first user is located in a front passenger position of the vehicle; or the first user is located in a rear-row area of the vehicle.

Optionally, with reference to the second aspect, when adjusting the display manner of the first area in the display area based on the eye position and the line-of-sight direction of the first user, the processing unit is configured to: determine whether the eye position of the first user is within a viewing angle range of the display area; and adjust the display manner of the first area in the display area to a first display manner when a first condition is met, where the first condition includes at least one of the following: The eye position of the first user is within a viewing angle range of the display area; the line-of-sight direction of the first user is towards the display area; or time for which a line of sight of the first user stays in the display area is greater than or equal to preset time.

Optionally, with reference to the second aspect, the first display manner includes at least one of the following: hiding the first area; hiding the privacy information of the second user in the first area; fading the first area; switching first definition of the first area to second definition, and displaying the privacy information of the second user in the second definition, where the first definition is higher than the second definition; or switching first resolution of the first area to second resolution, and displaying the privacy information of the second user in the second resolution, where the first resolution is higher than the second resolution.

Optionally, with reference to the second aspect, the processing unit is further configured to adjust the display manner of the first area in the display area from the first display manner to a second display manner when a second condition is met, where the second condition includes at least one of the following: The eye position of the first user exceeds the viewing angle range of the display area; the line-of-sight direction of the first user is towards an area other than the display area; or time for which the line of sight of the first user stays in the display area is less than the preset time.

Optionally, with reference to the second aspect, the second display manner includes at least one of the following: displaying the privacy information of the second user in the first area; switching second definition of the first area to first definition, and displaying the privacy information of the second user in the first definition, where the first definition is higher than the second definition; or switching second resolution of the first area to first resolution, and displaying the privacy information of the second user in the first resolution, where the first resolution is higher than the second resolution.

Optionally, with reference to the second aspect, the image information is further used to determine an eye position of the second user, and when determining whether the eye position of the first user is within the viewing angle range of the display area, the processing unit is configured to: determine an included angle formed by a connection line between the eye position of the second user and a first target point in the display area and a connection line between the eye position of the first user and the first target point, to obtain a first angle value; and determine, based on the first angle value, whether the eye position of the first user is within the viewing angle range of the display area.

Optionally, with reference to the second aspect, a cosine value of the first angle value is as follows:

$$R_1 = \frac{(P_{hud-Peye}) \cdot (P_{hud-P'_{eye}})}{|P_{hud-Peye}| \cdot |P_{hud-P'_{eye}}|}$$

, where $P_{hud}$ is the first target point, $P_{eye}$ is the eye position of the first user, and $P'_{eye}$ is the eye position of the second user.

Optionally, with reference to the second aspect, the processing unit is further configured to: determine an included angle formed by a connection line between the eye position of the first user and a first target point in the display area and the line-of-sight direction of the first user, to obtain a second angle value; and determine, based on the second angle value, whether the line-of-sight direction of the first user is towards the display area.

Optionally, with reference to the second aspect, a cosine value of the second angle value is as follows:

$$R_2 = \frac{(P_{hud-Peye}) \cdot \overrightarrow{V_{eye}}}{|P_{hud-Peye}|}$$

, where $P_{hud}$ is the first target point, $P_{eye}$ is an eye position of the second user, and $\overrightarrow{V_{eye}}$ is a unit vector of the line-of-sight direction of the first user.

Optionally, with reference to the second aspect, the first target point is a center point of the display area; the first target point is a vertex of the display area; or the first target point is a center point of a side edge of the display area, and the side edge of the display area includes a left side, a right side, an upper side, or a lower side of the display area.

Optionally, with reference to the second aspect, the processing unit is further configured to enable a privacy information protection mode when a third condition is met, where the third condition includes at least one of the following: detecting that there is a user other than the second user in the vehicle in which the second user is located; detecting that there is a user other than a preset user in the vehicle; and detecting a mode setting instruction, where the mode setting instruction is used to enable the privacy information protection mode.

According to a third aspect, an electronic apparatus is provided, where the apparatus is deployed in a vehicle, and the apparatus includes units configured to perform any method according to the first aspect.

In a possible implementation, the electronic apparatus may be, for example, a display device, or may be a processing apparatus for controlling the display device, for example, a vehicle-mounted terminal. In another possible implementation, the electronic apparatus may be, for example, a chip system in a display device, or may be a chip system in a processing apparatus. The chip system may include at least one processor, a memory, and an interface circuit. The interface circuit is configured to provide information input/output for the at least one processor. The memory stores a computer program. When the computer program is run on one or more processors, the method according to the first aspect is implemented.

According to a fourth aspect, an electronic apparatus is provided, where the apparatus includes at least one processor and a communication interface, and the at least one processor is configured to invoke a computer program stored in at least one memory, to perform the method according to the first aspect.

According to a fifth aspect, a display system is provided, including a vehicle-mounted terminal, where the vehicle-mounted terminal is configured to implement the method according to any one of the implementations of the first aspect.

According to a sixth aspect, a vehicle-mounted terminal is provided, where the vehicle-mounted terminal is configured to implement the method according to any one of the implementations of the first aspect.

According to a seventh aspect, a computer-readable storage medium is provided, where the computer-readable storage medium stores a computer program, and when the computer program is run on one or more processors, the method according to any one of the implementations of the first aspect is implemented.

According to an eighth aspect, a computer program product is provided. When the computer program product runs on one or more processors, the method according to any one of the implementations of the first aspect is implemented.

## BRIEF DESCRIPTION OF DRAWINGS

The following briefly describes accompanying drawings used in describing embodiments.

FIG. 1 is a schematic diagram of projecting information by an HUD onto a windshield for displaying according to an embodiment of this application;
FIG. 2 is a schematic diagram of HUD installation positions according to an embodiment of this application;
FIG. 3 is a schematic diagram of an imaging effect of an AR-HUD according to an embodiment of this application;
FIG. 4 is a schematic diagram of a display system according to an embodiment of this application;
FIG. 5 is a schematic diagram of a principle of controlling an AR-HUD to display an image by a vehicle-mounted terminal according to an embodiment of this application;
FIG. 6 is a schematic flowchart of a display method according to an embodiment of this application;

FIG. 7 is a schematic diagram of in-vehicle area division according to an embodiment of this application;

FIG. 8 shows a maximum angle value of a picture of a display area that can be seen by a first user according to an embodiment of this application;

FIG. 9 shows a minimum angle value of a picture of a display area that can be seen by a first user according to an embodiment of this application;

FIG. 10 is a first angle value according to an embodiment of this application;

FIG. 11 is a second angle value according to an embodiment of this application;

FIG. 12 is a schematic diagram of a structure of a display apparatus 120 according to an embodiment of this application;

FIG. 13 is a schematic diagram of a structure of a vehicle 130 according to an embodiment of this application; and

FIG. 14 is a schematic diagram of a structure of an electronic apparatus 140 according to an embodiment of this application.

## DESCRIPTION OF EMBODIMENTS

For ease of understanding, an HUD in embodiments of this application is first briefly described.

The HUD may also be referred to as a head-up display, and is a display apparatus that projects an image into a front field of view of a driver. Generally, the HUD may include components such as a projector, a reflector (which may also be referred to as a secondary reflector), and a projection lens (which may also be referred to as a primary reflector). An imaging principle of the HUD is similar to projection on a slide. An image is projected onto a windshield of a vehicle, so that the driver can obtain an image in front of a field of view. Specifically, generally, light information may be first emitted by the projector, reflected to the projection lens by the reflector, and then reflected to the windshield by the projection lens, so that an eye sees a virtual image that is located approximately 2 meters to 2.5 meters in front of the eye, and a person feels that the information is suspended on a road ahead.

It should be noted that a position of the image projected onto the windshield is adjustable, and generally, the position of the image may be adjusted by changing an angle of the projection lens. In addition, it may be understood that, because the windshield of the vehicle is curved, if the image is directly projected onto a curved glass surface, the image is distorted. This requires a corrective action, and therefore, the projection lens and reflector are usually designed to be curved.

As mentioned above, the HUD projects information such as speeding warning, vehicle status monitoring, fuel consumption, and a speed per hour onto the windshield for displaying by using an optical reflection principle. In this way, the driver can focus on a road ahead, implementing proactive driving safety. In addition, a delay and discomfort caused by constant adjustment of an eye focal length can be reduced.

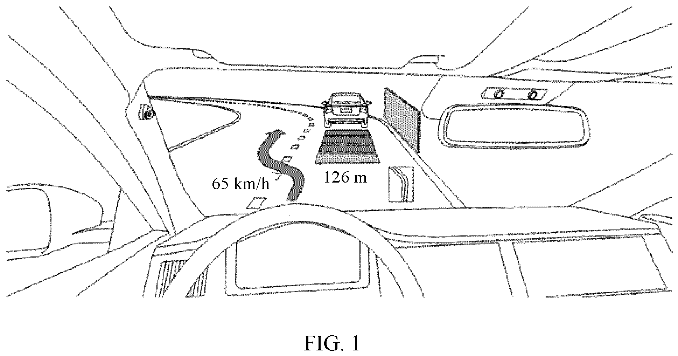

For example, refer to FIG. 1. FIG. 1 is a schematic diagram of projecting information by an HUD onto a windshield for displaying according to an embodiment of this application. As shown in FIG. 1, a speed per hour of a vehicle, a distance to a vehicle ahead, and the like, may be projected by an HUD onto a windshield for displaying.

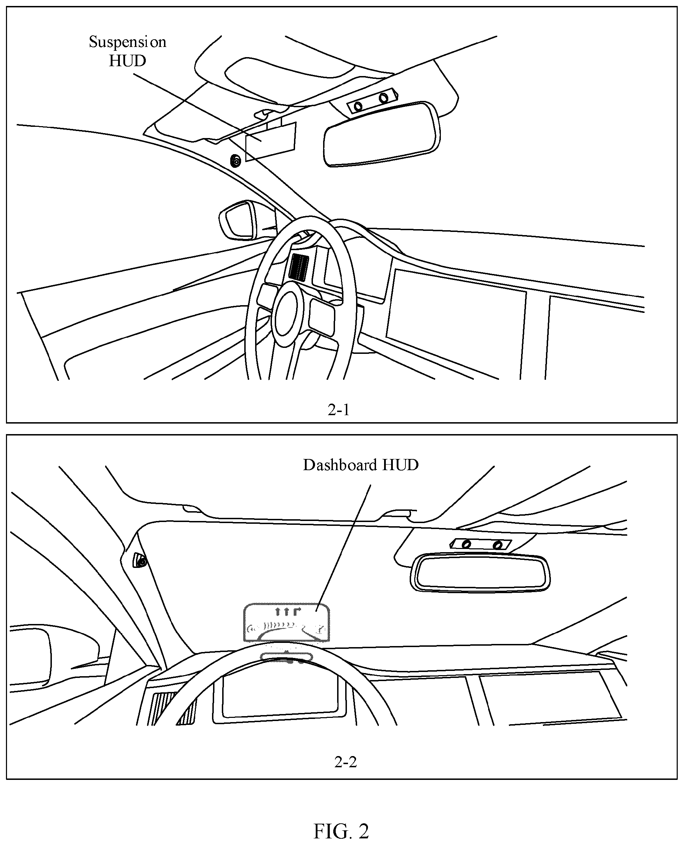

It should be understood that in this application, the HUD may be, for example, one or more of an AR-HUD, a C-HUD, or a W-HUD. In addition, from a perspective of an installation manner, the HUD may have a factory-installed manner and a customer-installed manner. From a perspective of an installation position, the HUD may be classified into a suspension HUD and a dashboard HUD. For example, refer to FIG. 2. FIG. 2 is a schematic diagram of HUD installation positions according to an embodiment of this application. In FIG. 2, 2-1 is a suspension HUD, and in FIG. 2, 2-2 is a dashboard HUD.

An AR-HUD may integrate an image projected by the HUD with real road surface information, to enhance obtaining of road surface information by a driver, and implement functions such as AR navigation and AR warning. For example, one or more functions such as vehicle following distance warning, lane-crossing warning, traffic light monitoring, an indication of changing a lane in advance, pedestrian warning, road sign displaying, a lane departure indication, ahead obstacle warning, and driver status monitoring may be implemented. It should be understood that a display carrier of the AR-HUD may be, for example, a virtual screen. In this application, the virtual screen may be classified into a near screen and a remote screen. The near screen may be located, for example, 2.5 meters from a front field of view of the driver, and the remote screen may be located, for example, 7 meters to 15 meters from the front field of view of the driver.

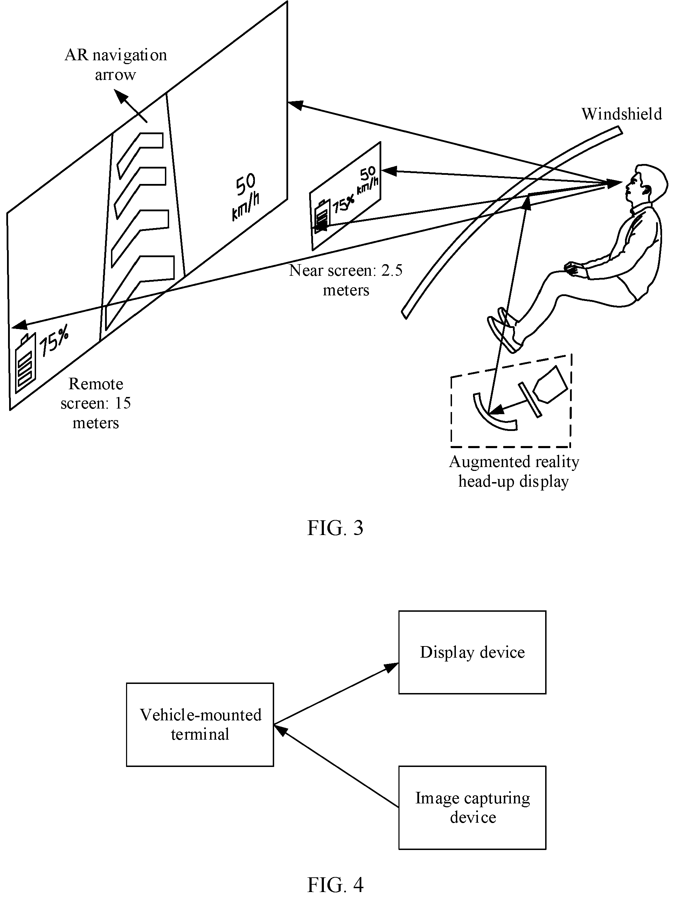

For example, refer to FIG. 3. FIG. 3 is a schematic diagram of an imaging effect of an AR-HUD according to an embodiment of this application. In FIG. 3, a virtual image surface that is projected by the AR-HUD to present onto a windshield of a vehicle may be located in front of a field of view of a driver, for example, located at a near display 2.5 meters from the front field of view of the driver, or located at a remote display 15 meters from the front field of view of the driver. Information such as a driving speed and vehicle power can be displayed on both the near display and the remote display. Information such as an AR navigation arrow can be displayed on the remote display to help a driver to drive more intelligently, comfortably and safely.

The C-HUD is commonly used in a customer-installed product market. For example, a translucent resin plate may be mounted on a top of a cockpit in a suspension manner or on a top of a dashboard, and the translucent resin plate, as a projection medium, is configured to reflect a virtual image. The resin plate is usually specially processed based on an imaging condition, for example, is made into a wedge shape to avoid reflection ghost and improve a display effect.

The W-HUD may reflect imaging by using a front windshield as an imaging medium, and may support a larger imaging area and a longer projection distance. However, the windshield is usually a curved surface reflector, and the W-HUD needs to adapt to a high-precision curved surface reflector based on a size and curvature of the windshield. This results in high costs. The W-HUD is mainly used in a factory-installed product market. Currently, there are a plurality of technical routes: imaging amplification based on a curved reflector, imaging amplification based on a holographic optical element (holographic optical element, HOE), and imaging amplification based on a holographic optical waveguide (waveguide). Currently, the HOE and waveguide technologies are not yet mature, and the technology of imaging amplification based on a curved reflector is mainly applied.

The following describes a system architecture and a service scenario in embodiments of this application. It should be noted that the system architecture and the service scenario described in this application are intended to describe the technical solutions in this application more clearly, and do not constitute a limitation on the technical solutions provided in this application. A person of ordinary skill in the art may know that with evolution of the system architecture and emergence of new service scenarios, the technical solutions provided in this application are also applicable to similar technical problems.

Refer to FIG. 4. FIG. 4 is a schematic diagram of a display system according to an embodiment of this application. The display system may include a display device.

The display device is configured to display various types of information, for example, display privacy information of a driver. In this application, the privacy information may include, for example, information in one or more forms of a text, a picture, a video, and the like. It should be understood that the privacy information is information that can be displayed by using a display device after user authorization. The display device may also be configured to display information such as speeding warning, vehicle condition monitoring, fuel consumption, and a speed per hour. Generally, the display device may be installed above a center console of a vehicle cockpit or inside the center console. In this application, the display device may be, for example, an HUD or a device with a projection imaging function. This is not specifically limited.

The display system may further include a vehicle-mounted terminal. The vehicle-mounted terminal is an electronic device having a data processing capability and/or a data receiving and sending capability. The vehicle-mounted terminal may control the display device to display various types of information, for example, display privacy information of a driver. In this embodiment of this application, the vehicle-mounted terminal may be a display apparatus having a processing function, or may be a processing apparatus, to control the display device to display the various types of information.

Optionally, the vehicle-mounted terminal may be further configured to perform one or more types of management such as driving safety management, operation management, service quality management, intelligent centralized scheduling management, and electronic stop sign control management on a vehicle.

In this application, the vehicle-mounted terminal may be deployed on the vehicle. The vehicle may be a car, a truck, a bus, a ship, an airplane, a helicopter, a tram, a golf cart, or the like. This is not particularly limited in this embodiment of this application.

Optionally, the display system may further include an image capturing device. The image capturing device may capture one or more images of a surrounding environment of the vehicle. For example, the image capturing device may detect and capture one or more of a face, a head, a part of a torso (for example, an arm), and the like of a user in the vehicle, and may further detect and capture one or more of an eye position, a line-of-sight direction, and the like of the user in the vehicle. The image capturing device may be, for example, one or more of a vehicle-mounted camera, an eye detector, a sensor, and the like. The vehicle-mounted camera may be, for example, one or more of a driver monitoring system (driver monitoring system, DMS) camera, a vehicle camera-monitor system (camera-monitor system, CMS) camera, and the like. It should be understood that the image capturing device may be disposed on the vehicle based on a requirement, for example, may be disposed in an area near a steering wheel or a center console. There may be one or more image capturing devices. Positions and a quantity of the image capturing devices are not limited in this application.

It should be noted that a link for communication between the vehicle-mounted terminal and the display device, the image capturing device, or the like may be various types of media, and may be specifically a wired link, a wireless link, a combination of a wired link and a wireless link, or the like. The wired link may be, for example, an Ethernet-based bus, or may be one or more of a CAN bus, an LIN bus, a MOST bus, a FlexRay bus, or the like. For example, the wireless link is a short-distance connection technology, including 802.11b/g, Bluetooth (Bluetooth), zigbee (zigbee), and an in-vehicle short-range wireless communication technology. For another example, the wireless link may be a long-distance connection technology, including a global system for mobile communication (global system for mobile communication, GSM), a general packet radio service (general packet radio service, GPRS), a universal mobile telecommunications system (universal mobile telecommunications system, UMTS), a long term evolution (long term evolution, LTE)-based communication technology, a 5th generation mobile communication technology (a 5th generation mobile network or 5th generation wireless system, 5th-Generation, 5G or 5G technology for short), an in-vehicle wireless communication technology, and the like. Certainly, there is still another technology that may be used to support the vehicle-mounted terminal in communicating with the display device, the image capturing device, and the like.

To better understand that the vehicle-mounted terminal controls the display device to display the various types of information, the following uses an example in which the display device is an AR-HUD and the image capturing device is a DMS camera, to describe a principle in which the vehicle-mounted terminal controls the AR-HUD to display an image.

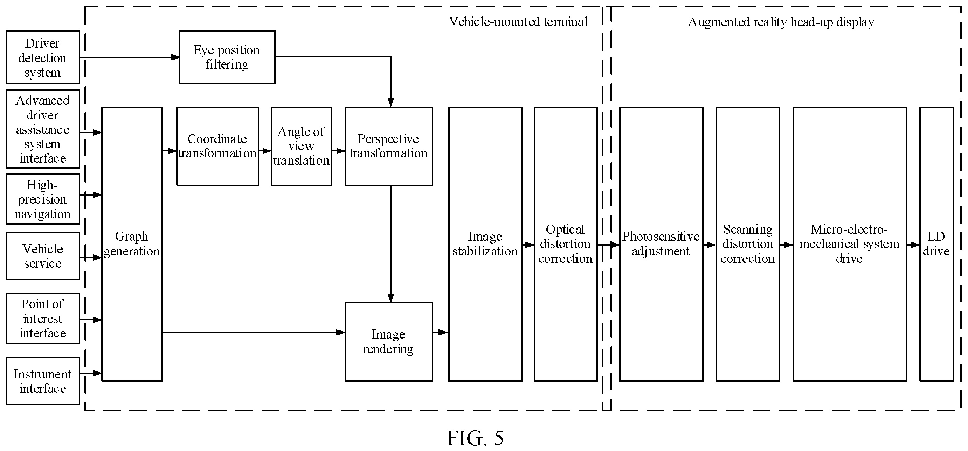

Refer to FIG. 5. FIG. 5 is a schematic diagram of a principle of controlling an AR-HUD to display an image by a vehicle-mounted terminal according to an embodiment of this application. As shown in FIG. 5, the vehicle-mounted terminal may obtain image information by using a DMS camera. The image information may include, for example, an eye of a user, for example, an eye of a driver, to determine an eye position of the user, and perform eye position filtering to obtain a filtered eye position. The vehicle-mounted terminal may further generate a graph. For example, the vehicle-mounted terminal obtains information such as a current position of a vehicle, a driving route of the vehicle, a speed of the vehicle, and a road condition ahead from an advanced driving assistance system (advanced driving assistant system, ADAS) interface, to generate the graph. The vehicle-mounted terminal obtains high-precision navigation information, for example, indicates to go straight to an XX road, indicates to turn left to the XX road, indicates to turn right to the XX road, indicates to make a U-turn, to generate the graph. The vehicle-mounted terminal obtains some vehicle service information such as video viewing service information and music playback service information, to generate the graph. The vehicle-mounted terminal obtains POI information from a point of interest (point of interest, POI) interface to generate the graph. The vehicle-mounted terminal obtains information such as fuel consumption and a speed per hour from an instrument interface to generate the graph. The POI means a location identifier in a geographical area, and the location identifier is used to identify a government department, a commercial institution (a gas station, a department store, a supermarket, a restaurant, a hotel, a convenience store, a hospital, and the like), a tourist attraction (a park, a public toilet, and the like), a historic site, a traffic facility (a station, a parking lot, a speeding camera, and a speed limit sign), and the like where the location identifier is located. The POI information may include one or more of a name, a type, location information, and the like. The location information may include, for example, one or more of a latitude, a longitude, an altitude, and the like. The type may be catering, accommodation, or the like. It should be understood that, after obtaining the generated graph, the vehicle-mounted terminal may sequentially perform coordinate transformation and angle of view translation on the graph, and perform, based on the filtered eye position, perspective transformation on the graph obtained after the angle of view translation, to obtain a graph obtained after the perspective transformation. Further, the vehicle-mounted terminal may perform image rendering based on the graph obtained after the perspective transformation and the graph generated by the vehicle-mounted terminal, to obtain an image-rendered graph. Then, the vehicle-mounted terminal sequentially performs image stabilization processing and optical distortion correction on the image-rendered graph, to transmit the corrected graph to the AR-HUD, so that the AR-HUD may sequentially perform photosensitive adjustment and scanning distortion correction on the corrected graph, and display the graph by using a micro-electro-mechanical system (micro-electro-mechanical system, MEMS) drive and a laser diode (laser diode, LD) drive.

It should be noted that, the image distortion means a phenomenon in which deformation/distortion, in a geometric shape, such as stretching or distortion occurs in content of an image and that is caused by a fact that an optical system with a large field of view and a short focal length does not meet a pinhole model, and after chief rays of different fields of view pass through the optical system, a height of a focal point on a Gaussian image plane is not equal to an ideal image height, and consequently an actual image point deviates from an ideal image point. For example, for a wide-angle camera, an image of a large field of view can be obtained, but significant image distortion can be likely introduced. For example, in a photographed image, more severe deformation/distortion is presented for a portrait (namely, a portrait of a large field of view) located on an outer side of the image. Therefore, image distortion correction needs to be performed on an image in which image distortion occurs, so that the image fits human vision.

In this application, the image distortion may also be referred to as optical distortion, lens distortion, photographing distortion, camera distortion, camera lens distortion, or the like. It should be understood that an image distortion correction algorithm may be used to perform image distortion correction. The image distortion correction algorithm may be, for example, a Zhang Zhengyou camera calibration algorithm.

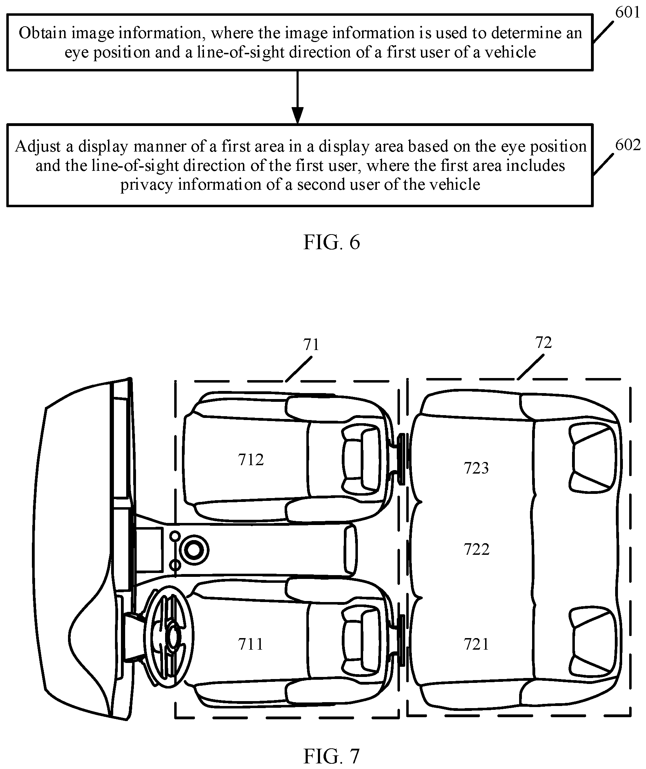

Refer to FIG. 6. FIG. 6 is a schematic flowchart of a display method according to an embodiment of this application. It should be understood that the embodiment described in FIG. 6 may be applied to a display device, or may be applied to a processing apparatus, for example, a vehicle-mounted terminal, for controlling the display device. The following uses a vehicle-mounted terminal as an example for description. As shown in FIG. 6, the method includes but is not limited to the following steps.

601: A vehicle-mounted terminal obtains image information, where the image information is used to determine an eye position and a line-of-sight direction of a first user of a vehicle.

Optionally, step 601 may be implemented in any one of the following manners. A specific manner to be used may depend on an implementation of the vehicle-mounted terminal, a pre-agreement, or a definition of a standard.

Manner 1.1: The vehicle-mounted terminal processes a source image by performing one or more of image quality enhancement processing, image distortion correction processing, and the like, to obtain the image information. Image quality enhancement means processing one or more of brightness, color, contrast, saturation, dynamic range, and the like of an image, and may also be referred to as image enhancement, which is equivalent to improving image quality, so that an image is clearer. Optionally, the source image may be an image obtained by the vehicle-mounted terminal through an image capturing device, or may be an image obtained by the vehicle-mounted terminal from a database storing the image. It should be understood that, in this application, a specific manner of obtaining the source image is not limited.

Manner 1.2: The vehicle-mounted terminal obtains image information by using an image capturing device. For example, the image capturing device may process, by performing one or more of image quality enhancement processing, image distortion correction processing, and the like, the source image captured by the image capturing device, to obtain the image information, and then send the image information to the vehicle-mounted terminal.

In this application, the image information may be, for example, a key point matrix or a key point set. That is, a face key point is marked in the image information. A face key point is a point used to locate a key area of a face in a face image. The key area includes one or more of eyebrows, eyes, the nose, the mouth, and a face contour. It should be understood that, in this application, at least an eye position of a user is marked in the image information, and the eye position of the user may be, for example, a middle point of two eye centers, a left eye center, or a right eye center. Herein, an eye center may be a pupil center, an eyeball center, a corneal center, or another position of the eye.

It should be noted that in this application, determining the eye position of the user by using the image information may have, for example, the following two implementations:

In a possible implementation, the eye position of the user may be determined by the vehicle-mounted terminal based on the image information and a pre-constructed 3D face model, or may be obtained in another manner. This is not limited herein. The 3D face model may be obtained by the vehicle-mounted terminal from a cloud.

In the other possible implementation, the eye position of the user may be obtained by the vehicle-mounted terminal from a cloud. For example, the vehicle-mounted terminal sends the image information to the cloud, so that the cloud determines the eye position of the user based on the image information and a pre-constructed 3D face model, and then sends the eye position to the vehicle-mounted terminal.

It should be understood that, in this application, the eye position of the first user of the vehicle may be marked in the image information, and an eye position of the second user of the vehicle may be further marked. The first user may be, for example, a non-driver, and the second user may be, for example, a driver. It should be understood that positions of the first user and the second user in the vehicle are different. In a possible implementation, the first user is located in a non-driver position of the vehicle, and the second user is located in a driver position of the vehicle. For example, the first user may be located in a front passenger position of the vehicle. For another example, the first user may be in a rear-row area of the vehicle. Specifically, if an in-vehicle area is divided into the driver position, the front passenger position, left in a second row, and right in the second row, the first user may be in the left in the second row or the right in the second row of the vehicle. If an in-vehicle area is divided into a driver position, a front passenger position, left in a second row, a middle in the second row, and right in the second row, the first user may be in the left in the second row, the middle in the second row, or the right in the second row of the vehicle.

It should be noted that the rear-seat area of the vehicle is relative to a front-row area of the vehicle. Refer to FIG. 7. FIG. 7 is a schematic diagram of in-vehicle area division according to an embodiment of this application. A front-row area 71 of the vehicle may include a driver position 711 and a front passenger position 712, and a rear-row area 72 of the vehicle may include a second row 721, a second row 722, and a second row 723.

A vehicle-mounted terminal may determine, in one or more of the following manners, whether there is a user in each area (for example, the driver position, the front passenger position, and the rear-row area) in the vehicle. When there is a user in the driver position, the user may be referred to as a second user. When there is a user in the front passenger position or in the rear-row area, the user may be referred to as a first user. It should be understood that, how the vehicle-mounted terminal determines whether there is a user in each area in the vehicle depends on an implementation of the vehicle-mounted terminal, a pre-agreement, or a definition of a standard.

Manner 2.1: The vehicle-mounted terminal may obtain image information of each area in the vehicle by using an image capturing device, and determine, by using the image information of each area, whether there is a user in each area. For example, if the vehicle-mounted terminal detects a face from the image information of each area captured by a DMS camera, it is determined that there is a user in the area. For another example, if the vehicle-mounted terminal obtains iris information of a human eye from the image information of each area captured by the DMS camera, it is determined that there is a user in the area.

Manner 2.2: The vehicle-mounted terminal may detect, by using a pressure sensor under a seat, whether there is a user in each area. For example, when a pressure value detected by a pressure sensor on a seat at an area is greater than or equal to a preset value, it may be determined that there is a user at the area.

Manner 2.3: The vehicle-mounted terminal may determine a sound source position by using audio information obtained by a microphone array, to determine, based on the sound source position, areas in which there are users. For example, if the sound source location is the front passenger position, there is a user in the front passenger position.

In addition, in this application, determining a line-of-sight direction of the user by using the image information may have, for example, the following two implementations:

In a possible implementation, the line-of-sight direction may be extracted by the vehicle-mounted terminal from the image information based on a gaze tracking model (eye tracking/gaze tracking model). The gaze tracking model may estimate, by using an image including a human eye or a face, a machine learning model, for example, a neural network model, of a gaze direction or a fixation point of the human eye.

In another possible implementation, the line-of-sight direction may be obtained by the vehicle-mounted terminal from a cloud. For example, the vehicle-mounted terminal sends the image information to the cloud, so that the cloud extracts the line-of-sight direction from the image information based on the gaze tracking model and sends the extracted line-of-sight direction to the vehicle-mounted terminal.

Optionally, before step 601, the method may further include: The vehicle terminal enables a privacy information protection mode when a third condition is met. In this application, that the vehicle-mounted terminal enables the privacy information protection mode may be understood as that the vehicle-mounted terminal performs step 601 and step 602. It can be learned that the vehicle-mounted terminal enables the privacy information protection mode when the third condition is met.

The third condition may include at least one of the following: The vehicle terminal detects that there is a user other than the second user in the vehicle in which the second user is located; the vehicle terminal detects that there is a user other than a preset user in the vehicle; and the vehicle terminal detects a mode setting instruction, where the mode setting instruction is used to enable the privacy information protection mode. It should be understood that the third condition may be pre-agreed or defined in a standard. This is not limited herein.

Optionally, the vehicle-mounted terminal may detect, through one or more of the following methods, that there is the user other than the second user in the vehicle in which the second user is located. A specific manner to be used depends on an implementation of the vehicle-mounted terminal, a pre-agreement, or a definition of a standard.

Manner 3.1: The vehicle-mounted terminal may obtain image information of another area except the driver position in the vehicle by using an image capturing device, and determine, by using the image information of the another area, that there is a user other than the second user in the vehicle. For example, if the vehicle-mounted terminal detects a face from image information of another area captured by a DMS camera, it is determined that there is a user other than the second user in the vehicle. For another example, if the vehicle-mounted terminal obtains iris information of a human eye from image information of another area captured by a DMS camera, it is determined that there is a user other than the second user in the vehicle. If iris information of a user does not match iris information of the second user, it indicates that there is a user other than the second user in the vehicle. The iris information of the second user may be iris information determined by the vehicle-mounted terminal based on image information obtained by the image capturing device in real time, or may be iris information determined by the vehicle-mounted terminal based on a pre-stored face image of the second user, or may be iris information obtained by the vehicle-mounted terminal from the cloud, or may be iris information determined by the vehicle-mounted terminal based on a face image of the second user sent by the cloud. The cloud may be, for example, an original equipment manufacturer (original equipment manufacturer, OEM) cloud, and the OEM cloud may also be referred to as a vehicle cloud.

Manner 3.2: The vehicle-mounted terminal may determine, by using a pressure sensor under a seat, that there is a user other than the second user in the vehicle. For example, when a pressure value detected by a pressure sensor on a seat of the front passenger position is greater than or equal to a preset value, it may be determined that there is a user other than the second user in the vehicle.

Manner 3.3: The vehicle-mounted terminal may determine a sound source position by using audio information obtained by a microphone array, to determine, based on the sound source position, that there is a user other than the second user in the vehicle. It should be understood that the sound source position in Manner 3.3 does not include the driver position.

Manner 3.4: The vehicle-mounted terminal may determine voiceprint information by using audio information obtained by a microphone array, to determine, based on the voiceprint information, that there is a user other than the second user in the vehicle. If the voiceprint information does not match voiceprint information of the second user, it indicates that there is a user other than the second user in the vehicle. It should be understood that the voiceprint information of the second user may be voiceprint information determined by the vehicle-mounted terminal based on audio information obtained in real time by the microphone array, or may be voiceprint information determined by the vehicle-mounted terminal based on prestored audio information, or may be voiceprint information obtained by the vehicle-mounted terminal from the cloud, or may be voiceprint information determined by the vehicle-mounted terminal based on audio information of the second user sent by the cloud.

Optionally, the vehicle-mounted terminal may detect, through one or more of the following methods, there is a user other than a preset user in the vehicle. A specific manner to be used depends on an implementation of the vehicle-mounted terminal, a pre-agreement, or a definition of a standard.

Manner 4.1: The vehicle-mounted terminal may obtain image information of each area in the vehicle by using an image capturing device, and determine, by using the image information of each area, that there is a user other than a preset user in the vehicle. For example, the vehicle-mounted terminal may perform facial recognition by using the image information of each area captured by the DMS camera, to determine that there is a user other than a preset user in the vehicle. For another example, the vehicle-mounted terminal may determine iris information of a human eye by using the image information of each area captured by the DMS camera, to determine, based on the iris information of the human eye, that there is a user other than a preset user in the vehicle. If iris information of a user does not match iris information of a preset user, it indicates that there is a user other than a preset user in the vehicle. The iris information of the preset user may be iris information determined by the vehicle-mounted terminal based on a pre-stored face image of the preset user, or may be iris information obtained by the vehicle-mounted terminal from the cloud, or may be iris information determined by the vehicle-mounted terminal based on the face image of the preset user sent by the cloud.

Manner 4.2: The vehicle-mounted terminal may determine voiceprint information by using audio information obtained by a microphone array, to determine, based on the voiceprint information, that there is a user other than a preset user in the vehicle. If the voiceprint information does not match voiceprint information of the preset user, it indicates that there is a user other than a preset user in the vehicle. It should be understood that the voiceprint information of the preset user may be voiceprint information determined by the vehicle-mounted terminal based on prestored audio information.

The preset user may be preset, or may be obtained by the vehicle-mounted terminal from a cloud, or may be determined by the user. This is not limited herein. In a possible implementation, the preset user may include, for example, the second user, and may further include a family member of the second user, a friend of the second user, and the like.

Optionally, the vehicle-mounted terminal may detect a mode setting instruction through one or more of the following manners. A specific manner to be used depends on an implementation of the vehicle-mounted terminal, a pre-agreement, or a definition of a standard.

Manner 5.1: The vehicle-mounted terminal identifies the mode setting instruction based on audio information obtained by a microphone array.

Manner 5.2: The vehicle-mounted terminal detects the mode setting instruction by using a central control screen. The central control screen is a screen disposed at a position between the driver position and the front passenger position of the vehicle. In Manner 5.2, the mode setting instruction may be understood as a gesture instruction. The gesture instruction is an action triggered on the central control screen by using an object like a finger, a stylus, or a pen. The vehicle-mounted terminal may recognize the gesture instruction to determine an operation represented by the gesture instruction, to respond to the operation represented by the gesture instruction. The gesture instruction may include, for example, tap, touch and hold, slide, rotate, double-tap, and pinch. The gesture instruction may be executed by using one hand, or may be executed by using both hands. From a perspective of whether to touch the central control screen, the gesture instruction includes a touch gesture instruction and a hover gesture instruction. The touch gesture instruction is a gesture instruction executed by touching the central control screen, and the hover gesture instruction is an air gesture instruction executed above the central control screen. From a perspective of a quantity of touch points corresponding to the gesture instruction, the gesture instruction includes a single-point touch gesture instruction and a multi-point touch gesture instruction. The multi-point touch gesture instruction is a gesture instruction in which a plurality of points (for example, a plurality of fingers) touch, at a same time point, for example, a plurality of fingers.

Optionally, the method may further include step 602.

602: The vehicle terminal adjusts a display manner of a first area in a display area based on the eye position and the line-of-sight direction of the first user, where the first area includes privacy information of the second user of the vehicle.

The display area is a display area of the display device. For example, the display area is a display area of an HUD. When the display area is a display area of an AR-HUD, the display area may be, for example, the near screen and/or the remote screen in FIG. 3. It should be understood the first area may be a part of the display area, or may be an entire area of the display area.

Optionally, step 602 may include: The vehicle terminal determines whether the eye position of the first user is within a viewing angle range of the display area; and the vehicle terminal adjusts the display manner of the first area in the display area to a first display manner when a first condition is met. It should be understood that the first condition may be pre-agreed or defined in a standard. This is not limited herein. It can be learned that, when the first condition is met, the vehicle-mounted terminal adjusts the display manner of the first area in the display area to the first display manner. In other words, when it is detected that the first user may view the privacy information of the second user in the first area, the vehicle-mounted terminal adjusts the display manner of the first area in the display area to the first display manner, so that a possibility that the first user can view the privacy information of the second user can be reduced. This can reduce a risk of privacy information leakage, and improves a feeling of safety of the user.

The viewing angle range of the display area includes an angle range of an eye that is of the first user and that can see a picture of the display area, and a boundary point may be determined by a maximum angle value and a minimum angle value of the eye that is of the first user and that can see the picture of the display area. In other words, the viewing angle range of the display area may include a range determined by the maximum angle value and the minimum angle value, and may further include the boundary point, for example, the maximum angle value and/or the minimum angle value, or may not include the boundary point. This may be determined in a specific implementation process. It should be understood that the viewing angle range of the display area is related to the eye position of the first user.

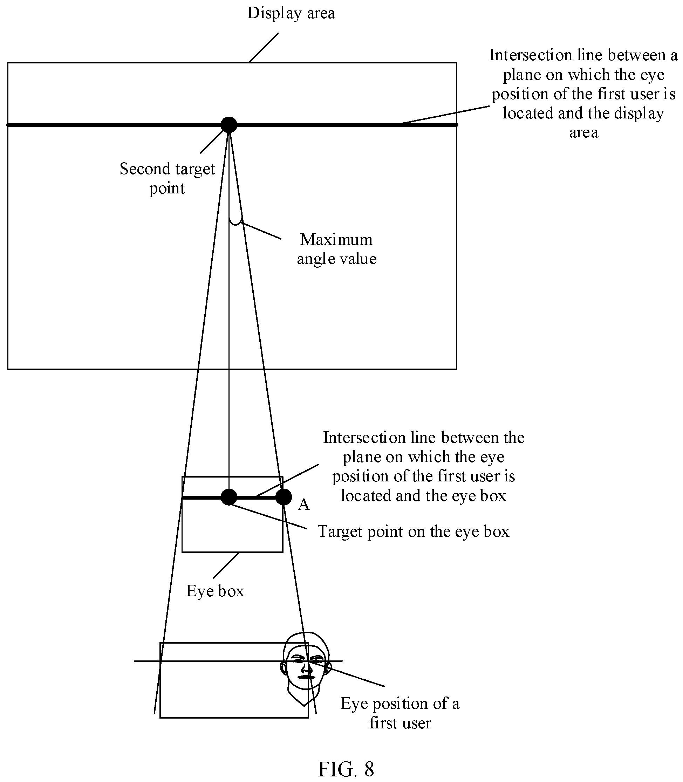

For example, an example in which the eye position of the first user is a middle point of two eye centers is used. Refer to FIG. 8. A maximum angle value of a picture of a display area that can be seen by a first user is described. The maximum angle value is an included angle formed by a connection line between a second target point in the display area and a target point on an eye box (eye box) and a connection line between the second target point and the eye position of the first user. The second target point is a center point of an intersection line between a plane on which the eye position of the first user is located and the display area, and the target point on the eye box is a center point of an intersection line between the plane on which the eye position of the first user is located and the eye box. The eye box may be, for example, a range in which an eye of a driver can see all displayed images. For example, a size of an eye box is generally 130 mm x 50 mm. Due to different heights of drivers, the eye box needs to be able to move within a range of $\pm 50$ mm in a vertical direction. In this application, a human eye may see clear imaging of the HUD or the AR-HUD within a range of the eye box. It should be understood that the connection line between the second target point and the eye position of the first user further intersects with the intersection line between the plane on which the eye position of the first user is located and the eye box at a point A.

Optionally, a cosine value of the maximum angle value is as follows: $R_3 = \dfrac{(P'_{hud} - P_{eye}) \cdot (P'_{hud} - P_{box})}{|P'_{hud} - P_{eye}| \cdot |P'_{hud} - P_{box}|}$, where $P'_{hud}$ is the second target point, $P_{eye}$ is the eye position of the first user, and $P_{box}$ is the target point on the eye box.

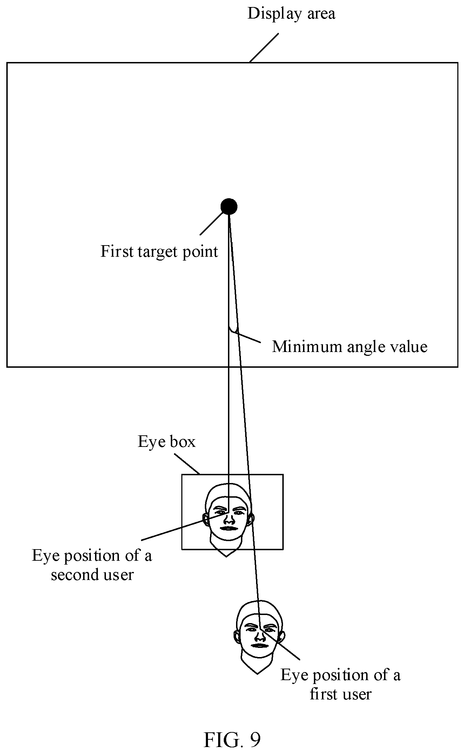

For another example, an example in which the eye position of the first user is the middle point of two eye centers and a first target point in the display area is the center point of the display area is used. Refer to FIG. 9. A minimum angle value of a picture of a display area that can be seen by a first user is described. The minimum angle value is an included angle formed by a connection line between the eye position of the second user and the first target point and a connection line between the first target point and the ear position of the second user. Optionally, the first target point is the center point of the display area; the first target point is a vertex of the display area; or the first target point is a center point of a side edge of the display area, and the side edge of the display area includes a left side, a right side, an upper side, or a lower side of the display area.

Optionally, a tangent value of the minimum angle value is as follows: $Z = \dfrac{X}{\left\| P'_{eye} P_{hud} \right\|}$, where $P_{hud}$

is the first target point, $P'_{eye}$ is the eye position of the second user, and $X$ is a width value of a half face of the second user.

The first condition may include, for example, at least one of the following: The eye position of the first user is within a viewing angle range of the display area; the line-of-sight direction of the first user is towards the display area; or time for which a line of sight of the first user stays in the display area is greater than or equal to preset time. The preset time may be preset, or may be obtained by the vehicle-mounted terminal from a cloud, or may be determined by the user. This is not limited herein.

In this application, the first display manner may include, for example, at least one of the following: hiding the first area; hiding the privacy information of the second user in the first area; fading the first area; switching first definition of the first area to second definition, and displaying the privacy information of the second user in the second definition, where the first definition is higher than the second definition; or switching first resolution of the first area to second resolution, and displaying the privacy information of the second user in the second resolution, where the first resolution is higher than the second resolution. It should be understood that, when definition of the first area is the first definition, or resolution of the first area is the first resolution, the user may clearly view the privacy information in the first area; when the definition of the first area is the second definition, or the resolution of the first area is the second resolution, the user cannot clearly view the privacy information, or even cannot view the privacy information. That is, when it is detected that the first user may view the privacy information of the second user in the first area, the vehicle-mounted terminal may switch the first definition of the first area to the second definition, and display the privacy information of the second user in the second definition. Because the first definition is higher than the second definition, and when the definition of the first area is the second definition, the first user cannot clearly view the privacy information, or even cannot view the privacy information, so that a possibility that the first user can view the privacy information of the second user can be reduced. This can reduce a risk of privacy information leakage, and improves a feeling of safety of the user. Similarly, when it is detected that the first user may view the privacy information of the second user in the first area, the vehicle-mounted terminal may switch the first resolution of the first area to the second resolution, and display the privacy information of the second user in the second resolution. Because the first resolution is higher than the second resolution, and when the resolution of the first area is the second resolution, the user cannot clearly view the privacy information, or even cannot view the privacy information, so that a possibility that the first user can view the privacy information of the second user can be reduced. This can reduce a risk of privacy information leakage, and improves a feeling of safety of the user.

Optionally, the method may further include: The vehicle-mounted terminal adjusts the display manner of the first area in the display area from the first display manner to a second display manner when a second condition is met. It should be understood that the second condition may be pre-agreed or defined in a standard. This is not limited herein. It can be learned that, when the second condition is met, the vehicle-mounted terminal adjusts the display manner of the first area in the display area from the first display manner to the second display manner. In other words, when it is detected that the first user cannot view the privacy information of the second user in the first area, the vehicle-mounted terminal adjusts the display manner of the first area in the display area from the first display manner to the second display manner, so that the second user can view the privacy information of the second user. In this way, normal use and driving safety of the second user can be ensured.

The second condition includes, for example, at least one of the following: The eye position of the first user exceeds the viewing angle range of the display area; the line-of-sight direction of the first user is towards an area other than the display area; or time for which the line of sight of the first user stays in the display area is less than the preset time.

It should be noted that, that the eye position of the first user exceeds the viewing angle range of the display area may be understood as that the eye position of the first user is not within the viewing angle range of the display area. That the line-of-sight direction of the first user is towards an area other than the display area may be understood as that the line-of-sight direction of the first user is not towards the display area. For example, the line-of-sight direction of the first user is towards a sunroof of the vehicle.

In this application, the second display manner includes, for example, at least one of the following: displaying the privacy information of the second user in the first area; switching second definition of the first area to first definition, and displaying the privacy information of the second user in the first definition, where the first definition is higher than the second definition; or switching second resolution of the first area to first resolution, and displaying the privacy information of the second user in the first resolution, where the first resolution is higher than the second resolution. It should be understood that, when it is detected that the first user cannot view the privacy information of the second user in the first area, the vehicle-mounted terminal may switch the second definition of the first area to the first definition, and display the privacy information of the second user in the first definition. Because the first definition is higher than the second definition, and the user can view the privacy information when the definition of the first area is the first definition, the second user can view the privacy information. Similarly, when it is detected that the first user cannot view the privacy information of the second user in the first area, the vehicle-mounted terminal may switch the second resolution of the first area to the first resolution, and display the privacy information of the second user in the first resolution. Because the first resolution is higher than the second resolution, and the user can view the privacy information when the resolution of the first area is the first resolution, the second user can view the privacy information. This ensures normal use and driving safety of the second user.

Optionally, the image information is further used to determine the eye position of the second user, and that the vehicle terminal determines whether the eye position of the first user is within a viewing angle range of the display area may include: The vehicle terminal determines an included angle formed by a connection line between the eye position of the second user and a first target point and a connection line between the eye position of the first user and the first target point, to obtain a first angle value; and the vehicle terminal determines, based on the first angle value, whether the eye position of the first user is within the viewing angle range of the display area. It can be learned that the vehicle-mounted terminal may determine, based on the first angle value, whether the eye position of the first user is within the viewing angle range of the display area, to prepare for subsequently adjusting the display manner of the first area in the display area.

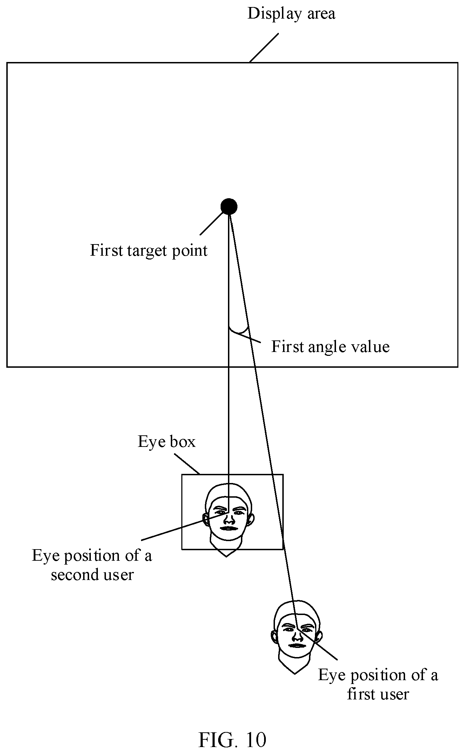

For example, an example in which the eye position of the first user and the eye position of the second user are middle points of two eye centers, and the first target point is the center point of the display area is used. Refer to FIG. 10. A first angle value is described. It can be learned that the first angle value is an included angle formed by a connection line between an eye position of a second user and a first target point and a connection line between the eye position of the first user and the first target point.

A cosine value of the first angle value is as follows:

$$R_1 = \frac{(P_{hud} - P_{eye}) \cdot (P_{hud} - P'_{eye})}{|P_{hud} - P_{eye}| \cdot |P_{hud} - P'_{eye}|}$$

, where $P_{hud}$ is the first target point, $P_{eye}$ is the eye position of the first user, and $P'_{eye}$ is the eye position of the second user.

Optionally, before that the vehicle terminal adjusts the display manner of the first area in the display area to a first display manner, the method may further include: The vehicle terminal determines an included angle formed by the line-of-sight direction of the first user and the connection line between the eye position of the first user and a first target point, to obtain a second angle value; and the vehicle terminal determines, based on the second angle value, whether the line-of-sight direction of the first user is towards the display area. It can be learned that the vehicle-mounted terminal may determine, based on the second angle value, whether the line-of-sight direction of the first user is towards the display area, to prepare for subsequently adjusting the display manner of the first area in the display area.

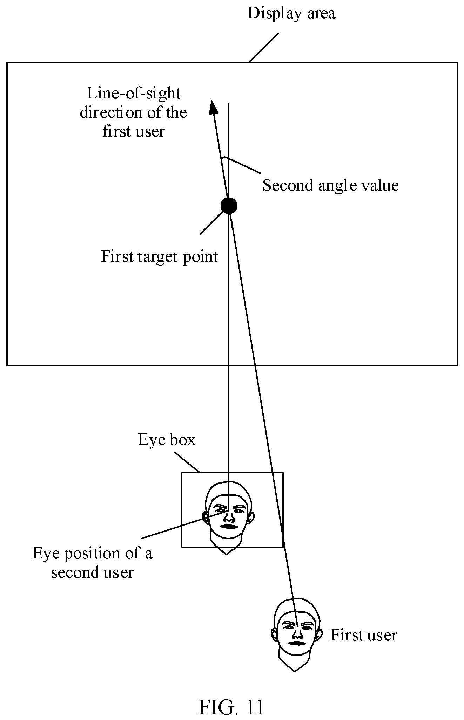

For example, an example in which the eye position of the first user is the middle point of two eye centers and the first target point is the center point of the display area. Refer to FIG. 11. The second angle value is described. It can be learned that the second angle value is an included angle formed by the connection line between the eye position of the first user and the first target point and the line-of-sight direction of the first user.

A cosine value of the second angle value is as follows:

$$R_2 = \frac{(P_{hud} - P_{eye}) \cdot \overrightarrow{V_{eye}}}{|P_{hud} - P_{eye}|}$$

, where $P_{hud}$ is the first target point, $P_{eye}$ is an eye position of the second user, and $\overrightarrow{V_{eye}}$ is a unit vector of the line-of-sight direction of the first user.

It can be learned that, in the foregoing solution, the vehicle-mounted terminal may obtain the image information, to determine the eye position and the line-of-sight direction of the first user based on the image information, and may adjust the display manner of the first area in the display area based on the eye position and the line-of-sight direction of the first user, to reduce a possibility that the first user can view the privacy information of the second user. This can reduce a risk of privacy information leakage, and improves a feeling of safety of the user.

The method in embodiments of this application is described in detail above. Apparatuses in embodiments of this application are provided below.

An embodiment of this application further provides an apparatus configured to implement any one of the foregoing methods. For example, a display apparatus is provided, including units (or means) configured to implement steps performed by the vehicle-mounted terminal in any one of the foregoing methods.

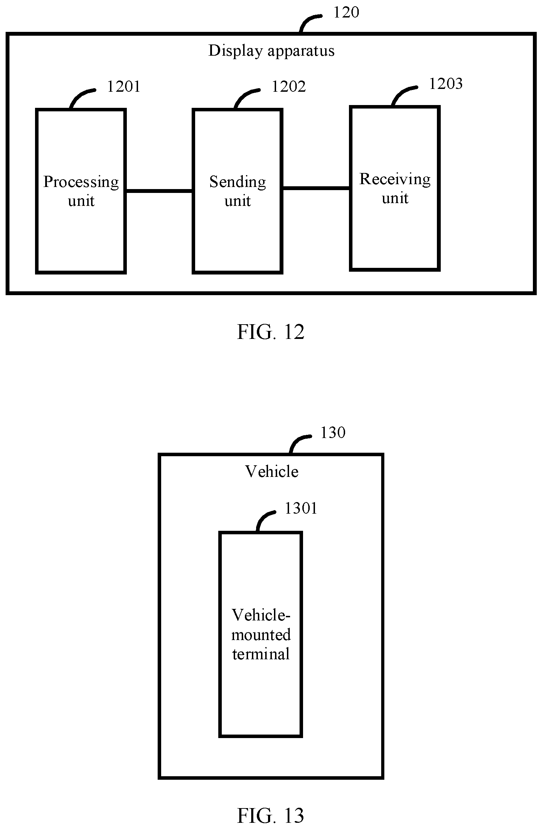

For example, refer to FIG. 12. FIG. 12 is a schematic diagram of a structure of a display apparatus 120 according to an embodiment of this application. The display apparatus 120 includes a processing unit 1201, a sending unit 1202, and a receiving unit 1203, for example, the display method in any embodiment shown in FIG. 6.

It should be understood that division into units in the apparatus is merely logical function division. During actual implementation, all or some of the units may be integrated into one physical entity or may be physically separated. In addition, a unit in the apparatus may be implemented in a form of a processor invoking software. For example, the apparatus includes a processor, the processor is connected to a memory, the memory stores instructions, and the processor invokes the instructions stored in the memory, to implement any one of the foregoing method or functions of units in the apparatus. The processor is, for example, a general purpose processor, for example, a central processing unit (central processing unit, CPU) or a microprocessor, and the memory is a memory in the apparatus or a memory outside the apparatus. Alternatively, a unit in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and functions of some or all units are implemented by designing a logical relationship between elements in the circuit. For another example, in another implementation, the hardware circuit may be implemented by using a programmable logic device (programmable logic device, PLD), using a field programmable gate array (field programmable gate array, FPGA) as an example, the field programmable gate array may include a large quantity of logic gate circuits, and a connection relationship between the logic gate circuits is configured by using a configuration file, to implement functions of some or all of the foregoing units. All the units of the foregoing apparatus may be implemented in a form of software invoked by a processor, or may be implemented in a form of a hardware circuit, or some of the units are implemented in a form of software invoked by a processor, and the remaining units are implemented in a form of a hardware circuit.

In this embodiment of this application, the processor is a circuit having a signal processing capability. In an implementation, the processor may be a circuit having an instruction reading and running capability, for example, a central processor unit, a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit, and the logical relationship of the hardware circuit is fixed or may be reconstructed. For example, the processor is a hardware circuit implemented by an ASIC or a PLD, for example, an FPGA. In a reconfigurable hardware circuit, a process in which the processor loads a configuration file to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that the units in the foregoing apparatus may be configured as one or more processors (or processing circuits) for implementing the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, the units may be integrated together and implemented in a form of a system-on-a-chip (system-on-a-chip, SOC). The SOC may include at least one processor, configured to implement any one of the foregoing method or implement functions of units of the apparatus. Types of the at least one processor may be different, for example, include a CPU and an FPGA, a CPU and an artificial intelligence processor, a CPU and a GPU, and the like.

Regardless of whether these function modules are subdivided or combined, the apparatus 120 performs a same general procedure in a display process. For example, the receiving unit 1203 and the sending unit 1202 in the apparatus 120 may alternatively be combined into a communication unit. Usually, each unit corresponds to respective program code (or a program instruction). When the program code corresponding to the unit is run on a processor, the unit executes a corresponding procedure to implement a corresponding function. It should be noted that, for implementation of each unit, refer to corresponding descriptions in the embodiment shown in FIG. 6.

In a possible implementation, the display apparatus 120 may be the vehicle-mounted terminal in the embodiment shown in FIG. 6, or a module in the vehicle-mounted terminal, for example, a chip or an integrated circuit. The apparatus includes a processing unit 1201 and a receiving unit 1203. The units are described as follows:

The receiving unit 1203 is configured to obtain image information, the image information is used to determine an eye position and a line-of-sight direction of a first user of a vehicle.

The processing unit 1201 is configured to adjust a display manner of a first area in a display area based on the eye position and the line-of-sight direction of the first user, where

the display area is a display area of an HUD, and the first area includes privacy information of a second user of the vehicle.

Optionally, the first user is located in a non-driver position of the vehicle, and the second user is located in a driver position of the vehicle.

Optionally, that the first user is located in a non-driver position of the vehicle includes: The first user is located in a front passenger position of the vehicle; or the first user is located in a rear-row area of the vehicle.

Optionally, when adjusting the display manner of the first area in the display area based on the eye position and the line-of-sight direction of the first user, the processing unit 1201 is configured to: determine whether the eye position of the first user is within a viewing angle range of the display area; and adjust the display manner of the first area in the display area to a first display manner when a first condition is met, where the first condition includes at least one of the following: The eye position of the first user is within a viewing angle range of the display area; the line-of-sight direction of the first user is towards the display area; or time for which a line of sight of the first user stays in the display area is greater than or equal to preset time.

Optionally, the first display manner includes at least one of the following: hiding the first area; hiding the privacy information of the second user in the first area; fading the first area; switching first definition of the first area to second definition, and displaying the privacy information of the second user in the second definition, where the first definition is higher than the second definition; or switching first resolution of the first area to second resolution, and displaying the privacy information of the second user in the second resolution, where the first resolution is higher than the second resolution.

Optionally, the processing unit 1201 is further configured to adjust the display manner of the first area in the display area from the first display manner to a second display manner when a second condition is met, where the second condition includes at least one of the following: The eye position of the first user exceeds the viewing angle range of the display area; the line-of-sight direction of the first user is towards an area other than the display area; or time for which the line of sight of the first user stays in the display area is less than the preset time.

Optionally, the second display manner includes at least one of the following: displaying the privacy information of the second user in the first area; switching second definition of the first area to first definition, and displaying the privacy information of the second user in the first definition, where the first definition is higher than the second definition; or switching second resolution of the first area to first resolution, and displaying the privacy information of the second user in the first resolution, where the first resolution is higher than the second resolution.

Optionally, the image information is further used to determine an eye position of the second user, and when determining whether the eye position of the first user is within the viewing angle range of the display area, the processing unit 1201 is configured to: determine an included angle formed by a connection line between the eye position of the second user and a first target point in the display area and a connection line between the eye position of the first user and the first target point, to obtain a first angle value; and determine, based on the first angle value, whether the eye position of the first user is within the viewing angle range of the display area.

Optionally, a cosine value of the first angle value is as follows: $R_1 = \dfrac{(P_{hud}-P_{eye}) \cdot (P_{hud}-P'_{eye})}{|P_{hud}-P_{eye}| \cdot |P_{hud}-P'_{eye}|}$ , where $P_{hud}$ is the first target point, $P_{eye}$ is the eye position of the first user, and $P'_{eye}$ is the eye position of the second user.

Optionally, the processing unit 1201 is further configured to: determine an included angle formed by a connection line between the eye position of the first user and a first target point in the display area and the line-of-sight direction of the first user, to obtain a second angle value; and determine, based on the second angle value, whether the line-of-sight direction of the first user is towards the display area.

Optionally, a cosine value of the second angle value is as follows: $R_2 = \dfrac{(P_{hud}-P_{eye}) \cdot \overrightarrow{V_{eye}}}{|P_{hud}-P_{eye}|}$ where $P_{hud}$ is the first target point, $P_{eye}$ is an eye position of the second user, and $\overrightarrow{V_{eye}}$ is a unit vector of the line-of-sight direction of the first user.

Optionally, the first target point is the center point of the display area; the first target point is a vertex of the display area; or the first target point is a center point of a side edge of the display area, and the side edge of the display area includes a left side, a right side, an upper side, or a lower side of the display area.

Optionally, the processing unit 1201 is further configured to enable a privacy information protection mode when a third condition is met, where the third condition includes at least one of the following: detecting that there is a user other than the second user in the vehicle in which the second user is located; detecting that there is a user other than a preset user in the vehicle; and detecting a mode setting instruction, where the mode setting instruction is used to enable the privacy information protection mode.

Refer to FIG. 13. FIG. 13 is a schematic diagram of a structure of a vehicle 130 according to an embodiment of this application. The vehicle 130 includes a vehicle-mounted terminal 1301, where

the vehicle-mounted terminal in the vehicle is configured to obtain image information, where the image information is used to determine an eye position and a line-of-sight direction of a first user of a vehicle; and

the vehicle-mounted terminal in the vehicle is further configured to adjust a display manner of a first area in a display area based on the eye position and the line-of-sight direction of the first user, where

the display area is a display area of an HUD, and the first area includes privacy information of a second user of the vehicle.

Optionally, the first user is located in a non-driver position of the vehicle, and the second user is located in a driver position of the vehicle.

Optionally, that the first user is located in a non-driver position of the vehicle includes: The first user is located in a front passenger position of the vehicle; or the first user is in a rear-row area of the vehicle.

Optionally, when adjusting the display manner of the first area in the display area based on the eye position and the line-of-sight direction of the first user, the vehicle-mounted terminal in the vehicle is specifically configured to: determine whether the eye position of the first user is within a viewing angle range of the display area; and adjust the display manner of the first area in the display area to a first display manner when a first condition is met, where the first condition includes at least one of the following: The eye position of the first user is within a viewing angle range of the display area; the line-of-sight direction of the first user is towards the display area; or time for which a line of sight of the first user stays in the display area is greater than or equal to preset time.

Optionally, the first display manner includes at least one of the following: hiding the first area; hiding the privacy information of the second user in the first area; fading the first area; switching first definition of the first area to second definition, and displaying the privacy information of the second user in the second definition, where the first definition is higher than the second definition; or switching first resolution of the first area to second resolution, and displaying the privacy information of the second user in the second resolution, where the first resolution is higher than the second resolution.

Optionally, the vehicle-mounted terminal in the vehicle is further configured to: adjust the display manner of the first area in the display area from the first display manner to a second display manner when a second condition is met, where the second condition includes at least one of the following: The eye position of the first user exceeds the viewing angle range of the display area; the line-of-sight direction of the first user is towards an area other than the display area; or time for which the line of sight of the first user stays in the display area is less than the preset time.

Optionally, the second display manner includes at least one of the following: displaying the privacy information of the second user in the first area; switching second definition of the first area to first definition, and displaying the privacy information of the second user in the first definition, where the first definition is higher than the second definition; or switching second resolution of the first area to first resolution, and displaying the privacy information of the second user in the first resolution, where the first resolution is higher than the second resolution.

Optionally, the image information is further used to determine an eye position of the second user, and when determining whether the eye position of the first user is within the viewing angle range of the display area, the vehicle-mounted terminal in the vehicle is specifically configured to: determine an included angle formed by a connection line between the eye position of the second user and a first target point in the display area and a connection line between the eye position of the first user and the first target point, to obtain a first angle value; and determine, based on the first angle value, whether the eye position of the first user is within the viewing angle range of the display area.

Optionally, a cosine value of the first angle value is as follows: $R_1 = \dfrac{(P_{hud-}P_{eye}) \cdot (P_{hud-}P'_{eye})}{|P_{hud-}P_{eye}| \cdot |P_{hud-}P'_{eye}|}$, where $P_{hud}$ is the first target point, $P_{eye}$ is the eye position of the first user, and $P'_{eye}$ is the eye position of the second user.

Optionally, the vehicle-mounted terminal in the vehicle is further configured to: determine an included angle formed by a connection line between the eye position of the first user and a first target point in the display area and the line-of-sight direction of the first user, to obtain a second angle value; and determine, based on the second angle value, whether the line-of-sight direction of the first user is towards the display area.

Optionally, a cosine value of the second angle value is as follows: $R_2 = \dfrac{(P_{hud-}P_{eye}) \cdot \overrightarrow{V_{eye}}}{|P_{hud-}P_{eye}|}$, where $P_{hud}$ is the first target point, $P_{eye}$ is an eye position of the second user, and $\overrightarrow{V_{eye}}$ is a unit vector of the line-of-sight direction of the first user.

Optionally, the first target point is the center point of the display area; the first target point is a vertex of the display area; or the first target point is a center point of a side edge of the display area, and the side edge of the display area includes a left side, a right side, an upper side, or a lower side of the display area.

Optionally, the vehicle-mounted terminal in the vehicle is further configured to enable a privacy information protection mode when a third condition is met, where the third condition includes at least one of the following: detecting that there is a user other than the second user in the vehicle in which the second user is located; detecting that there is a user other than a preset user in the vehicle; and detecting a mode setting instruction, where the mode setting instruction is used to enable the privacy information protection mode.

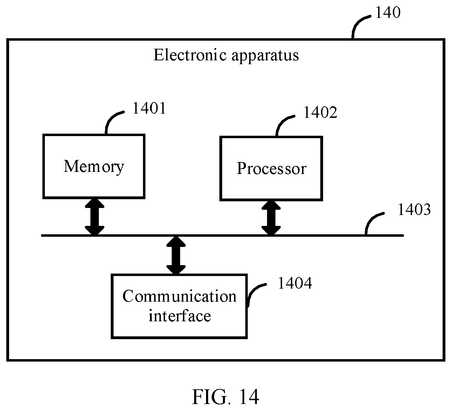

Refer to FIG. 14. FIG. 14 is a schematic diagram of a structure of an electronic apparatus 140 according to an embodiment of this application. The apparatus 140 may include at least one memory 1401 and at least one processor 1402. Optionally, a bus 1403 may be further included. Further, optionally, a communication interface 1404 may be further included. The memory 1401, the processor 1402, and the communication interface 1404 are connected by using the bus 1403.

The memory 1401 is configured to provide storage space, and the storage space may store data such as an operating system and a computer program. The memory 1401 may be one or a combination of a random access memory (random access memory, RAM), a read-only memory (read-only memory, ROM), an erasable programmable read-only memory (erasable programmable read only memory, EPROM), a compact disc read-only memory (compact disc read-only memory, CD-ROM), and the like.

The processor 1402 is a module that performs an arithmetic operation and/or a logical operation, and may be specifically one or a combination of a plurality of processing modules such as a CPU, a GPU, a microprocessor unit (microprocessor unit, MPU), an ASIC, an FPGA, and a complex programmable logic device (Complex programmable logic device, CPLD).

The communication interface 1404 is configured to receive data sent by an external device and/or send data to an external device, and may be a wired link interface like an Ethernet cable, or may be a wireless link (for example, Wi-Fi, Bluetooth, or general wireless transmission) interface. Optionally, the communication interface 1404 may further include a transmitter (such as a radio frequency transmitter or an antenna) coupled to the interface, a receiver, or the like.

The processor 1402 in the apparatus 140 is configured to read the computer program stored in the memory 1401, and is configured to perform the foregoing display method, for example, the display method described in any embodiment in FIG. 6.

In some possible implementations, the electronic apparatus 140 may be the vehicle-mounted terminal in the embodiment shown in FIG. 6, or a module in the vehicle-mounted terminal, for example, a chip or an integrated circuit. The processor 1402 in the apparatus 140 is configured to read the computer program stored in the memory 1401, to perform the following operations:

> obtaining image information through the communication interface 1404, where the image information is used to determine an eye position and a line-of-sight direction of a first user of a vehicle; and
> adjusting a display manner of a first area in a display area based on the eye position and the line-of-sight direction of the first user, where
> the display area is a display area of an HUD, and the first area includes privacy information of a second user of the vehicle.

Optionally, the first user is located in a non-driver position of the vehicle, and the second user is located in a driver position of the vehicle.

Optionally, that the first user is located in a non-driver position of the vehicle includes: The first user is located in a front passenger position of the vehicle; or the first user is in a rear-row area of the vehicle.

Optionally, when adjusting the display manner of the first area in the display area based on the eye position and the line-of-sight direction of the first user, the processor 1402 is specifically configured to perform the following operations: determining whether the eye position of the first user is within a viewing angle range of the display area; and adjusting the display manner of the first area in the display area to a first display manner when a first condition is met, where the first condition includes at least one of the following: The eye position of the first user is within a viewing angle range of the display area; the line-of-sight direction of the first user is towards the display area; or time for which a line of sight of the first user stays in the display area is greater than or equal to preset time.

Optionally, the first display manner includes at least one of the following: hiding the first area; hiding the privacy information of the second user in the first area; fading the first area; switching first definition of the first area to second definition, and displaying the privacy information of the second user in the second definition, where the first definition is higher than the second definition; or switching first resolution of the first area to second resolution, and displaying the privacy information of the second user in the second resolution, where the first resolution is higher than the second resolution.

Optionally, the processor 1402 is further configured to perform the following operations: adjusting the display manner of the first area in the display area to a second display manner when a second condition is met, where the second condition includes at least one of the following: The eye position of the first user exceeds the viewing angle range of the display area; the line-of-sight direction of the first user is towards an area other than the display area; or time for which the line of sight of the first user stays in the display area is less than the preset time.

Optionally, the second display manner includes at least one of the following: displaying the privacy information of the second user in the first area; switching second definition of the first area to first definition, and displaying the privacy information of the second user in the first definition, where the first definition is higher than the second definition; or switching second resolution of the first area to first resolution, and displaying the privacy information of the second user in the first resolution, where the first resolution is higher than the second resolution.

Optionally, the image information is further used to determine an eye position of the second user, and when determining whether the eye position of the first user is within the viewing angle range of the display area, the processor 1402 is specifically configured to perform the following operations: determining an included angle formed by a connection line between the eye position of the second user and a first target point in the display area and a connection line between the eye position of the first user and the first target point, to obtain a first angle value; and determining, based on the first angle value, whether the eye position of the first user is within the viewing angle range of the display area.

Optionally, a cosine value of the first angle value is as follows: $R_1 = \dfrac{(P_{hud} - P_{eye}) \cdot (P_{hud} - P'_{eye})}{|P_{hud} - P_{eye}| \cdot |P_{hud} - P'_{eye}|}$ , where $P_{hud}$ is the first target point, $P_{eye}$ is the eye position of the first user, and $P'_{eye}$ is the eye position of the second user.

Optionally, the processor 1402 is further configured to perform the following operations: determining an included angle formed by a connection line between the eye position of the first user and a first target point in the display area and the line-of-sight direction of the first user, to obtain a second angle value; and determining, based on the second angle value, whether the line-of-sight direction of the first user is towards the display area.

Optionally, a cosine value of the second angle value is as follows: $R_2 = \dfrac{(P_{hud} - P_{eye}) \cdot \overrightarrow{V_{eye}}}{|P_{hud} - P_{eye}|}$ , where $P_{hud}$ is the first target point, $P_{eye}$ is an eye position of the second user, and $\overrightarrow{V_{eye}}$ is a unit vector of the line-of-sight direction of the first user.

Optionally, the first target point is the center point of the display area; the first target point is a vertex of the display area; or the first target point is a center point of a side edge of the display area, and the side edge of the display area includes a left side, a right side, an upper side, or a lower side of the display area.

Optionally, the processor 1402 is further configured to perform the following operations: enabling a privacy information protection mode when a third condition is met, where the third condition includes at least one of the following: detecting that there is a user other than the second user in the vehicle in which the second user is located; detecting that there is a user other than a preset user in the vehicle; and detecting a mode setting instruction, where the mode setting instruction is used to enable the privacy information protection mode.

An embodiment of this application provides an electronic apparatus. The apparatus is deployed in a vehicle, and the apparatus includes units configured to perform any method in the embodiment shown in FIG. 6.

An embodiment of this application provides an electronic apparatus. The apparatus includes at least one processor and a communication interface. The at least one processor is configured to invoke a computer program stored in the at least one memory, to perform any method in the embodiment shown in FIG. 6.

An embodiment of this application provides a display system, including a vehicle-mounted terminal, where the vehicle-mounted terminal is configured to implement the method in any one of the embodiment shown in FIG. 6.

An embodiment of this application provides a vehicle-mounted terminal. The vehicle-mounted terminal is configured to implement the method in any one of the embodiment shown in FIG. 6.

An embodiment of this application provides a computer-readable storage medium. The computer-readable storage medium stores a computer program. When the computer program is run on one or more processors, the method according to any one of the embodiment shown in FIG. 6 is implemented.

An embodiment of this application provides a computer program product. When the computer program product runs on one or more processors, the method in any one of the embodiment shown in FIG. 6 is implemented.

When computer instructions are loaded and executed on a computer, all or some of the procedures or functions according to embodiments of this application can be implemented. The computer may be a general-purpose computer, a dedicated computer, a computer network, or another programmable apparatus. The computer instructions may be stored in a computer-readable storage medium, or may be transmitted by using a computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

Sequence adjustment, combination, or deletion may be performed on the steps in the method embodiments of this application based on an actual requirement.

Modules in the apparatus embodiments of this application may be combined, divided, or deleted based on an actual requirement.

The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in descriptions of this application, unless otherwise specified, "a plurality of" means two or more than two. "At least one of the following items" or a similar expression means any combination of these items, including any combination of a single item or a plurality of items. For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in the embodiments of this application means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

**Claims**

1. A display method, comprising:

   obtaining image information, wherein the image information is used to determine an eye position and a line-of-sight direction of a first user of a vehicle; and
   adjusting a display manner of a first area in a display area based on the eye position and the line-of-sight direction of the first user, wherein the display area is a display area of a head-up display, and the first area comprises privacy information of a second user of the vehicle.

**2.** The method according to claim 1, wherein the first user is located in a non-driver position of the vehicle, and the second user is located in a driver position of the vehicle.

**3.** The method according to claim 2, wherein that the first user is located in a non-driver position of the vehicle comprises:
the first user is located in a front passenger position of the vehicle; or the first user is located in a rear-row area of the vehicle.

**4.** The method according to any one of claims 1 to 3, wherein the adjusting a display manner of a first area in a display area based on the eye position and the line-of-sight direction of the first user comprises:

determining whether the eye position of the first user is within a viewing angle range of the display area; and
adjusting the display manner of the first area in the display area to a first display manner when a first condition is met, wherein
the first condition comprises at least one of the following:

the eye position of the first user is within the viewing angle range of the display area;
the line-of-sight direction of the first user is towards the display area; or
time for which a line of sight of the first user stays in the display area is greater than or equal to preset time.

**5.** The method according to claim 4, wherein the first display manner comprises at least one of the following:

hiding the first area;
hiding the privacy information of the second user in the first area;
fading the first area;
switching first definition of the first area to second definition, and displaying the privacy information of the second user in the second definition, wherein the first definition is higher than the second definition; or
switching first resolution of the first area to second resolution, and displaying the privacy information of the second user in the second resolution, wherein the first resolution is higher than the second resolution.

**6.** The method according to claim 4, wherein the method further comprises:

adjusting the display manner of the first area in the display area from the first display manner to a second display manner when a second condition is met, wherein
the second condition comprises at least one of the following:

the eye position of the first user exceeds the viewing angle range of the display area;
the line-of-sight direction of the first user is towards an area other than the display area; or
time for which the line of sight of the first user stays in the display area is less than the preset time.

**7.** The method according to claim 6, wherein the second display manner comprises at least one of the following:

displaying the privacy information of the second user in the first area;
switching second definition of the first area to first definition, and displaying the privacy information of the second user in the first definition, wherein the first definition is higher than the second definition; or
switching second resolution of the first area to first resolution, and displaying the privacy information of the second user in the first resolution, wherein the first resolution is higher than the second resolution.

**8.** The method according to claim 4, wherein the image information is further used to determine an eye position of the second user, and the determining whether the eye position of the first user is within a viewing angle range of the display area comprises:

determining an included angle formed by a connection line between the eye position of the second user and a first target point in the display area and a connection line between the eye position of the first user and the first target point, to obtain a first angle value; and
determining, based on the first angle value, whether the eye position of the first user is within the viewing angle range of the display area.

**9.** The method according to claim 8, wherein a cosine value of the first angle value is as follows:

$$R_1 = \frac{(P_{hud} - P_{eye}) \cdot (P_{hud} - P'_{eye})}{|P_{hud} - P_{eye}| \cdot |P_{hud} - P'_{eye}|},$$ wherein

$P_{hud}$ is the first target point, $P_{eye}$ is the eye position of the first user, and $P'_{eye}$ is the eye position of the second user.

**10.** The method according to claim 4, wherein before the adjusting the display manner of the first area in the display area to a first display manner, the method further comprises:

determining an included angle formed by a connection line between the eye position of the first user and a first target point in the display area and the line-of-sight direction of the first user, to obtain a second angle value; and

determining, based on the second angle value, whether the line-of-sight direction of the first user is towards the display area.

11. The method according to claim 10, wherein a cosine value of the second angle value is as follows:

$$R_2 = \frac{(P_{hud-Peye}) \cdot \overrightarrow{V_{eye}}}{|P_{hud-Peye}|}$$ , wherein

$P_{hud}$ is the first target point, $P_{eye}$ is an eye position of the second user, and $\overrightarrow{V_{eye}}$ is a unit vector of the line-of-sight direction of the first user.

12. The method according to any one of claims 8 to 11, wherein

the first target point is a center point of the display area;
the first target point is a vertex of the display area; or
the first target point is a center point of a side edge of the display area, and the side edge of the display area comprises a left side, a right side, an upper side, or a lower side of the display area.

13. The method according to claim 1, wherein before the obtaining image information, the method further comprises:

enabling a privacy information protection mode when a third condition is met, wherein
the third condition comprises at least one of the following:

detecting that there is a user other than the second user in the vehicle in which the second user is located;
detecting that there is a user other than a preset user in the vehicle; and
detecting a mode setting instruction, wherein
the mode setting instruction is used to enable the privacy information protection mode.

14. A display apparatus, comprising a receiving unit and a processing unit, wherein

the receiving unit is configured to obtain image information, wherein the image information is used to determine an eye position and a line-of-sight direction of a first user of a vehicle; and
the processing unit is configured to adjust a display manner of a first area in a display area based on the eye position and the line-of-sight direction of the first user, wherein
the display area is a display area of a head-up display, and the first area comprises privacy information of a second user of the vehicle.

15. The apparatus according to claim 14, wherein the first user is located in a non-driver position of the vehicle, and the second user is located in a driver position of the vehicle.

16. The apparatus according to claim 15, wherein that the first user is located in a non-driver position of the vehicle comprises:
the first user is located in a front passenger position of the vehicle; or the first user is located in a rear-row area of the vehicle.

17. The apparatus according to any one of claims 14 to 16, wherein when adjusting the display manner of the first area in the display area based on the eye position and the line-of-sight direction of the first user, the processing unit is configured to:

determine whether the eye position of the first user is within a viewing angle range of the display area; and
adjust the display manner of the first area in the display area to a first display manner when a first condition is met, wherein
the first condition comprises at least one of the following:

the eye position of the first user is within the viewing angle range of the display area;
the line-of-sight direction of the first user is towards the display area; or
time for which a line of sight of the first user stays in the display area is greater than or equal to preset time.

18. The apparatus according to claim 17, wherein the first display manner comprises at least one of the following:

hiding the first area;
hiding the privacy information of the second user in the first area;
fading the first area;
switching first definition of the first area to second definition, and displaying the privacy information of the second user in the second definition, wherein the first definition is higher than the second definition; or
switching first resolution of the first area to second resolution, and displaying the privacy information of the second user in the second resolution, wherein the first resolution is higher than the second resolution.

19. The apparatus according to claim 17, wherein the processing unit is further configured to adjust the display manner of the first area in the display area from the first display manner to a second display manner when a second condition is met, wherein the second condition comprises at least one of the following:

the eye position of the first user exceeds the viewing angle range of the display area;
the line-of-sight direction of the first user is towards an area other than the display area; or
time for which the line of sight of the first user stays in the display area is less than the preset time.

20. The apparatus according to claim 19, wherein the second display manner comprises at least one of the following:

displaying the privacy information of the second user in the first area;
switching second definition of the first area to first definition, and displaying the privacy information of the second user in the first definition, wherein the first definition is higher than the second definition; or
switching second resolution of the first area to first resolution, and displaying the privacy information of the second user in the first resolution, wherein the first resolution is higher than the second resolution.

21. The apparatus according to claim 17, wherein the image information is further used to determine an eye position of the second user, and when determining whether the eye position of the first user is within the viewing angle range of the display area, the processing unit is configured to:

determine an included angle formed by a connection line between the eye position of the second user and a first target point in the display area and a connection line between the eye position of the first user and the first target point, to obtain a first angle value; and
determine, based on the first angle value, whether the eye position of the first user is within the viewing angle range of the display area.

22. The apparatus according to claim 21, wherein a cosine value of the first angle value is as follows:

$$R_1 = \frac{(P_{hud} - P_{eye}) \cdot (P_{hud} - P'_{eye})}{|P_{hud} - P_{eye}| \cdot |P_{hud} - P'_{eye}|};$$ , wherein

$P_{hud}$ is the first target point, $P_{eye}$ is the eye position of the first user, and $P'_{eye}$ is the eye position of the second user.

23. The apparatus according to claim 17, wherein the processing unit is further configured to:

determine an included angle formed by a connection line between the eye position of the first user and a first target point in the display area and the line-of-sight direction of the first user, to obtain a second angle value; and
determine, based on the second angle value, whether the line-of-sight direction of the first user is towards the display area.

24. The apparatus according to claim 23, wherein a cosine value of the second angle value is as follows:

$$R_2 = \frac{(P_{hud} - P_{eye}) \cdot \vec{V_{eye}}}{|P_{hud} - P_{eye}|}$$ , wherein

$P_{hud}$ is the first target point, $P_{eye}$ is an eye position of the second user, and $\vec{V_{eye}}$ is a unit vector of the line-of-sight direction of the first user.

25. The apparatus according to any one of claims 21 to 24, wherein

the first target point is a center point of the display area;
the first target point is a vertex of the display area; or
the first target point is a center point of a side edge of the display area, and the side edge of the display area comprises a left side, a right side, an upper side, or a lower side of the display area.

26. The apparatus according to claim 14, wherein the processing unit is further configured to enable a privacy information protection mode when a third condition is met, wherein
the third condition comprises at least one of the following:

detecting that there is a user other than the second user in the vehicle in which the second user is located;
detecting that there is a user other than a preset user in the vehicle; and
detecting a mode setting instruction, wherein the mode setting instruction is used to enable the privacy information protection mode.

27. An electronic apparatus, wherein the apparatus is deployed in a vehicle, and the apparatus comprises units configured to perform the method according to any one of claims 1 to 13.

28. An electronic apparatus, wherein the apparatus comprises at least one processor and a communication interface, and the at least one processor is configured to invoke a computer program stored in at least one memory, to perform the method according to any one of claims 1 to 13.

29. A display system, comprising a vehicle-mounted terminal, wherein the vehicle-mounted terminal is configured to implement the method according to any one of claims 1 to 13.

30. A vehicle-mounted terminal, wherein the vehicle-mounted terminal is configured to implement the method according to any one of claims 1 to 13.

31. A computer-readable storage medium, wherein the computer-readable storage medium stores a computer program, and when the computer program is run on one or more processors, the method according to any one of claims 1 to 13 is implemented.

32. A computer program product, wherein when the computer program product runs on one or more processors, the method according to any one of claims 1 to 13 is implemented.

65 km/h    126 m

FIG. 1

Suspension HUD

2-1

Dashboard HUD

2-2

FIG. 2

AR navigation arrow

Windshield

50 km/h

50 75% km/h

Near screen: 2.5 meters

75%

Remote screen: 15 meters

Augmented reality head-up display

FIG. 3

Display device

Vehicle-mounted terminal

Image capturing device

FIG. 4

Augmented reality head-up display

LD drive

Micro-electro-mechanical system drive

Scanning distortion correction

Photosensitive adjustment

Vehicle-mounted terminal

Optical distortion correction

Image stabilization

Perspective transformation

Image rendering

Angle of view translation

Coordinate transformation

Eye position filtering

Graph generation

Driver detection system

Advanced driver assistance system interface

High-precision navigation

Vehicle service

Point of interest interface

Instrument interface

FIG. 5

Obtain image information, where the image information is used to determine an eye position and a line-of-sight direction of a first user of a vehicle 601

Adjust a display manner of a first area in a display area based on the eye position and the line-of-sight direction of the first user, where the first area includes privacy information of a second user of the vehicle 602

FIG. 6

FIG. 7

Display area

Intersection line between a
plane on which the eye
position of the first user is
located and the display
area

Second target
point

Maximum
angle value

Intersection line between the
plane on which the eye
position of the first user is
located and the eye box

A

Target point on the eye box

Eye box

Eye position of a
first user

FIG. 8

Display area

First target point

Minimum angle value

Eye box

Eye position of a
second user

Eye position of a
first user

FIG. 9

Display area

First target point

First angle value

Eye box

Eye position of a
second user

Eye position of a
first user

FIG. 10

Display area

Line-of-sight direction of the first user

Second angle value

First target point

Eye box

Eye position of a second user

First user

FIG. 11

120

**Display apparatus**

1201       1202       1203

| Processing unit | Sending unit | Receiving unit |

FIG. 12

130

**Vehicle**

1301

Vehicle-mounted terminal

FIG. 13

140

Electronic apparatus

1401

Memory

1402

Processor

1403

1404

Communication
interface

FIG. 14

## INTERNATIONAL SEARCH REPORT

| International application No. |
|---|
| **PCT/CN2022/112309** |

**A.  CLASSIFICATION OF SUBJECT MATTER**

G06F 3/14(2006.01)i;  G06F 21/84(2013.01)i;  B60W 50/14(2020.01)i

According to International Patent Classification (IPC) or to both national classification and IPC

**B.  FIELDS SEARCHED**

Minimum documentation searched (classification system followed by classification symbols)

G06F;B60W

Documentation searched other than minimum documentation to the extent that such documents are included in the fields searched

Electronic data base consulted during the international search (name of data base and, where practicable, search terms used)

CNTXT; ENTXT; DWPI; ENTXTC; CNKI: 车辆, 隐私, 信息, 泄露, 偷窥, 屏幕, 眼睛, 视线, privacy disclosure, screen, privacy, eyes, sight line, vehicle, leaks, HUD, leakage

**C.  DOCUMENTS CONSIDERED TO BE RELEVANT**

| Category* | Citation of document, with indication, where appropriate, of the relevant passages | Relevant to claim No. |
|---|---|---|
| X | CN 114056344 A (AUDI AG) 18 February 2022 (2022-02-18)<br>        description, paragraphs 2-83 | 1-32 |
| A | CN 111737774 A (GUANGDONG XIAOTIANCAI TECHNOLOGY CO., LTD.) 02 October 2020 (2020-10-02)<br>        entire document | 1-32 |
| A | CN 105389527 A (NUBIA TECHNOLOGY CO., LTD.) 09 March 2016 (2016-03-09)<br>        entire document | 1-32 |
| A | CN 114647319 A (CHONGQING CHANG'AN AUTOMOBILE CO., LTD.) 21 June 2022 (2022-06-21)<br>        entire document | 1-32 |
| A | US 2018203412 A1 (IBM) 19 July 2018 (2018-07-19)<br>        entire document | 1-32 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 October 2022** | **18 January 2023** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/112309**

| Patent document cited in search report | | | Publication date (day/month/year) | Patent family member(s) | | | Publication date (day/month/year) |
|---|---|---|---|---|---|---|---|
| CN | 114056344 | A | 18 February 2022 | None | | | |
| CN | 111737774 | A | 02 October 2020 | CN | 111737774 | B | 20 September 2022 |
| CN | 105389527 | A | 09 March 2016 | CN | 105389527 | B | 08 October 2019 |
| CN | 114647319 | A | 21 June 2022 | None | | | |
| US | 2018203412 | A1 | 19 July 2018 | US | 10386787 | B2 | 20 August 2019 |

Form PCT/ISA/210 (patent family annex) (January 2015)